# EUROPÄISCHE PATENTSCHRIFT

(11) **EP 0 837 889 B1**
(45) Veröffentlichungstag und Bekanntmachung des Hinweises auf die Patenterteilung: **24.04.2002**
(21) Anmeldenummer: 96923941.7
(22) Anmeldetag: 26.06.1996
(51) Int. Cl.: C08F 265/04, C08F 291/02, C08F 285/00, C08L 51/00, C08L 101/00

(54) **NEUE POLYMERZUSAMMENSETZUNG FÜR PFROPFCOPOLYMERISATE SOWIE DEREN MISCHUNGEN UND DIESE ENTHALTENDE THERMOPLASTISCHE MASSEN II**
NEW POLYMER COMPOSITION FOR GRAFT COPOLYMERS AS WELL AS MIXTURES THEREOF AND THERMOPLASTIC COMPOUNDS CONTAINING THEM
NOUVELLE COMPOSITION POLYMERE POUR COPOLYMERES GREFFES AINSI QUE LEURS MELANGES ET LES MATIERES THERMOPLASTIQUES LES CONTENANT

(30) Priorität: 26.06.1995 DE 19523080; 20.03.1996 DE 19610896
(43) Veröffentlichungstag der Anmeldung: 29.04.1998
(73) Patentinhaber: BASF AKTIENGESELLSCHAFT, 67056 Ludwigshafen (DE)
(72) Erfinder: FISCHER, Michael, D-67071 Ludwigshafen (DE); ROSENAU, Bernhard, D-67434 Neustadt (DE); FISCHER, Wolfgang, D-67067 Ludwigshafen (DE)
(74) Vertreter: Isenbruck, Günter, Dr.
(86) Internationale Anmeldenummer: EP9602792
(87) Internationale Veröffentlichungsnummer: WO9701589

(56) Entgegenhaltungen:
- EP-A- 0 099 532
- EP-A- 0 258 741
- EP-A- 0 390 144
- EP-A- 0 450 485

## Beschreibung

Die Erfindung betrifft Pfropfcopolymerisate (P1) mit einer mittleren Teilchengröße von 40 bis 2000 nm, enhaltend mindestens
P1.1) ein Weichsegment aus kautschukelastischem Material mit einer Glastemperatur von höchstens 0°C und einer mittleren Teilchengröße (d₅₀) von 40 bis 120 nm als eine Pfropfgrundlage.
P1.2) ein Hartsegment mit einer Glastemperatur von mindestens 11°C als eine Pfropfauflage, das
   P1. 2.1) 30 bis 99,9 Gew.-% mindestens eines vinylaromatischen Monomeren (P1. 2.1),
   P1.2. 2) 0 bis 20 Gew.-% mindestens eines Vernetzers (P1.2.2) und
   P1.2.3) 0,1 bis 70 Gew.-% mindestens eines mit P1.2.1 copolymerisierbaren Monomeren (P1.2.3) beinhaltet,
wobei die Summe der Gew.-% von P1.2.1 bis P1.2.3 100 ergibt,
wobei der an die Pfropfgrundlage angrenzende Bereich der darauffolgenden Pfropfauflage P1. 2 20 bis 70 Gew.-% mindestens eines vinylaromatischen Monomeren P1. 2. 1 und der der Pfropfgrundlage abgewandte Bereich 30 bis 80 Gew.-% mindestens eines vinylaramatischen Monomeren P1. 2. 1 mit mindestens einem damit copolymerisierbaren Monomeren P1. 2. 3 in einem Verhältnis P1. 2. 1 zu P1. 2. 3 von 90:10 bis 60:40 aufweist, wobei die Summe der Gew.-% von P1. 2. 1 und P1. 2. 2 mit P1. 2. 3 100 ergibt.

Weiterhin betrifft die vorliegende Erfindung ein Verfahren zur Herstellung dieser Segmente sowie deren Verwendung zur Herstellung von Pfropfcopolymerisaten, Verfahren zur Herstellung dieser Pfropfcopolymerisate, deren Verwendung in Mischungen, Pfropfcopolymerisate enthaltende Mischungen, Verfahren zur Herstellung dieser Mischungen sowie die Verwendung dieser Pfropfcopolymerisate und Mischungen zur Herstellung thermoplastischer Massen und diese thermoplastischen Massen. Bevorzugte Ausführungsformen sind sowohl den Unteransprüchen als auch der Beschreibung zu entnehmen. Zudem betrifft die Erfindung Formkörper, Folien, Fasern und Beschichtungen, die die erfindungsgemäßen Pfropfcopolymerisate, Mischungen sowie Massen enthalten oder verwenden.

Pfropfcopolymerisate, die häufig auch als "Kern-Schale"-Teilchen bezeichnet werden, sind beispielsweise als Schlagzähmodifizierer für Kunststoffe wie Styrol-Acrylnitril-Copolymere, Polyvinylchlorid (PVC), Polymethylmethacrylat oder Polycarbonat bekannt. Sie können zwei oder mehrstufig aufgebaut sein. Die Pfropfgrundlage, der "Kern", kann aus elastomerem "weichem" Segment, d.h. solchem mit Glasübergangstemperaturen von weniger als ca. 25°C, z.B. weniger als 0°C, oder nicht elastomeren, "hartem" Segment, d.h. solchem mit Glasübergangstemperaturen von mehr als etwa 25°C, z.B. mehr als 50°C, bestehen. Die Pfropfauflage, "Schale" oder "Hülle", kann entsprechend hart bzw. weich oder im Fall von mehrstufigen Pfropfcopolymerisaten abwechselnd hart oder weich bzw. weich oder hart sein.

Die Glastemperatur der einzelnen Stufen kann jeweils durch die Wahl der Monomeren und zusätzlich durch Zugabe eines oder mehrerer Vernetzer beeinflußt werden. Vernetzend wirken z.B. Verbindungen bzw. Monomere, die zwei oder mehr funktionelle Gruppen aufweisen, die mit den die Pfropfgrundlage oder -auflage aufbauenden Monomeren reagieren können. Reagieren alle funktionellen Gruppen des polyfunktionellen Monomeren gleichschnell ab, so wirken diese Monomeren nur vernetzend. Enthalten die Vernetzer jedoch funktionelle Gruppen unterschiedlicher Reaktivität, so können die nicht abreagierten funktionellen Gruppen als Pfropfstellen beispielsweise für die Anbindung einer Pfropfauflage an die Pfropfgrundlage dienen. Derartige Vernetzer wirken also nicht nur vernetzend sondern auch pfropfaktiv.

Für welche Zwecke Pfropfcopolymerisate eingesetzt werden können, wie sie beispielsweise optische Qualität, Einfärbbarkeit, Witterungsstabilität oder Schlagrißbildung sowie Spannungsrißkorrosion in Formmassen beeinflussen, hängt von deren Aufbau aber auch von deren Größe und Morphologie ab.

EP 450 485 offenbart Pfropfcopolymerisate für thermoplatische Massen mit Pfropfgrundlagen aus elastomeren vernetzten Acrylester-Polymerisaten, wobei die Pfropfgrundlagen mittler Teilchengrößen von 50 bis 150 bzw 200 bis 700 nm besitzen, mit Pfropfhüllen, die ein vinylaromatisches Monomer beinhalten, sowie weiteren Pfropfhüllen aus styrolhaltigen Copolymeren. Diese sind den erfindugsgemäßen thermoplastischen Massen, Pfropfcopolymermischungen und Pfropfcopolymerisaten insbesondere in den Punkten Temperaturunabhängigkeit der mechanischen Eigenschaften ohne Verschlechterung anderer Eigenschaften - beispielweise der Einfärbbarkeit - sowie bezüglich der definierten Kern-Schalen-Morphologie unterlegen.

Um zu schlagzähen, thermoplastischen Massen zu gelangen, gibt man Pfropfkautschuke zu den bei Raumtemperatur spröden, die Matrix bildenden Polymerisaten. Die Herstellung solcher Schlagzähmodifizierer ist seit langem bekannt und beispielsweise in DE-A-12 60 135, DE-A-23 11 129 und DE-A-28 26 925 beschrieben. Besteht die Matrix aus Polystyrol oder Styrolcopolymeren, so läßt sich beobachten, daß die Wirksamkeit der Pfropfcopolymerisate bezüglich ihrer schlagzähmodifizierenden Wirkung mit zunehmender Größe der Pfropfcopolymerisate zunimmt. Bei Einsatz von kleinteiligen Pfropfkautschuken besteht gleichzeitig das Problem, daß die Zähigkeit der schlagzähmodifizierenden Massen stark von der Verarbeitungstemperatur abhängt.

Massen mit verbesserten bzw. temperaturunabhängigen mechanischen Eigenschaften - vorzugsweise Schlagzähigkeit - bei gleichbleibend guten anderen Eigenschaften, wie beispielsweise der Einfärbbarkeit, können durch Zumischen einer großteiligen zu einer kleinteiligen Kautschukkomponente (bimodale Kautschukteilchen) erhalten werden, wie in der DE-A-28 26 925 beschrieben. Oftmals reicht die dort erzielte Schlagzähigkeit, insbesondere die Tieftemperaturschlagzähigkeit, der Massen für hohe Beanspruchung nicht aus. Zudem kann die Schlagzähigkeit nicht durch beliebig große Zugaben der großteiligen Kautschukmenge erhöht werden, da sonst die Einfärbbarkeit deutlich verschlechtert wird.

EP 0 450 485 A2 offenbart ein kleinteiliges Pfropfmischcopolymerisat A, das aus einem Weichsegment mit einer Teilchengröße von 76 nm als Propfgrundlage (a1) und einem Hartsegment (a2) besteht. Weiterhin ist EP 0 450 485 A2 das Pfropfmischcopolymerisat B mit einer Pfropfgrundlage mit einer Teilchengröße von 410 nm zu entnehmen. Die Materialeigenschaften, die sich aus derartigen Pfropfmischcopolymerisaten ergeben, sind für die Anwendung im Kfz-Bereich weniger geeignet.

Aufgabe der vorliegenden Erfindung war es, Kunststoffe, insbesondere thermoplastische Massen zur Verfügung zu stellen, die vor allem bei tiefen Temperaturen, beispielsweise unter 0°C, bevorzugt unabhängig von der Verarbeitungstemperatur, bessere mechanische Eigenschaften, wie beispielsweise Schlagzähigkeit, Spannungsrißkorrosion und insbesondere bessere multiaxiale Zähigkeiten, aufweisen und sich gleichbleibend gut oder leichter einfärben lassen und widerstandsfähigere Oberflächen aufweisen, deren Glanz oder Mattheit gleich bleibt oder sich verbessern läßt.

In diesem Zusammenhang war es eine weitere erfindungsgemäße Aufgabe, Pfropfcopolymerisate zur Verfügung zu stellen, bei denen sich die Teilchengröße und vorzugsweise ein definierter Phasenübergang einstellen läßt, wobei der Einstellung von kleinen Teilchen (< 150 nm) und großen Teilchen (≥ 150 nm) bei definierten Phasenübergängen besondere Bedeutung zukommt, und diese Pfropfcopolymerisate gleichfalls die mechanischen Eigenschaften > der thermoplastischen Massen in der zuvor beschriebenen Weise beeinflussen sollen.

Weiterhin lag eine erfindungsgemäße Aufgabe darin, daß Mischungen von Pfropfcopolymerisaten zur Verfügung gestellt werden, die zuvor genannte Pfropfcopolymerisate enthalten, wobei Mischungen aus klein- und großteiligen Pfropfcopolymerisaten bevorzugt zur Verfügung gestellt werden sollen, und diese Mischungen gleichfalls die mechanischen Eigenschaften der thermoplastischen Massen in der zuvor beschriebenen Weise beeinflussen sollen.

Der vorliegenden Erfindung lag ferner die Aufgabe zugrunde, witterungsbeständige Produkte auf Basis von Acrylnitril-Styrol-Acrylestern(ASA)-Polymerisaten, insbesondere solchen mit einer Polystyrol-Co-Acrylnitrilmatrix, zu schaffen, welche neben den günstigen Eigenschaften der bekannten Massen, wie Witterungs- und Alterungsbeständigkeit, eine sehr gute Zähigkeit bei guter Einfärbbarkeit sowie eine Unabhängigkeit der Zähigkeit von der Verarbeitungstemperatur aufweisen.

Eine weitere erfindungsgemäße Aufgabe bestand vorzugsweise darin, durch die Teilchengröße, insbesondere durch kleinteilige Pfropfcopolymerisate, die alleine oder in Mischungen mit weiteren Pfropfcopolymerisaten in thermoplastischen Massen verwandt werden, temperaturunabhängige mechanische Eigenschaften bei gleichbleibenden oder besseren anderen Eigenschaften, insbesondere der Einfärbbarkeit, zu erzeugen.

Diese Aufgaben werden überraschend durch die eingangs definierten Pfropfcopolymerisate sowie die diese enthaltenden Pfropfcopolymerisatmischungen und durch die Pfropfcopolymerisate und/oder Mischungen enthaltende thermoplastische Massen gelöst.

Die Pfropfcopolymerisate werden mit "P" bezeichnet. Die auf P folgende Zahl nummeriert die Pfropfcopolymerisate fortlaufend durch. Die darauf folgende Zahl nummeriert die Segmente durch, die das Pfropfcopolymerisat beinhaltet. Bei bevorzugten erfindungsgemäßen Pfropfcopolymerisaten, bei denen die Reihenfolge der aufeinanderfolgenden Segmente nicht beliebig ist, sondern feststeht, bezeichnet die Zahl 1 die Pfropfgrundlage und die Zahlen 2, 3 usw. die auf die Pfropfgrundlage folgenden Pfropfauflagen in ihrer Abfolge. Die dritte auf P folgende Zahl bezeichnen die von dem Segment beinhalteten Monomere, Vernetzer oder Vernetzerkomponenten. Für die erfindungsgemäßen Mischungen steht "M". Die auf M folgende Zahl nummeriert die Mischungen fortlaufend durch. Die auf die M an zweiter Stelle folgende römische Zahl in Großbuchstben bezeichnet die Pfropfcopolymerisate, die die Mischung beinhaltet.
"T" bezeichnet die erfindungsgemäßen thermoplastischen Massen. Die auf T folgende Zahl nummeriert die thermoplastischen Massen fortlaufend durch. Die in Kleinbuchstaben geschriebenen römischen Zahlen bezeichnen die von den Massen beinhalteten Bestandteile.

Ein erfindungsgemäßes Pfropfcopolymerisat P1 beinhaltet vorzugsweise ein Weichsegment (P1.1) mit einer Glastemperatur von höchstens 10, bevorzugt höchstens 0 und besonders bevorzugt höchstens -20 °C in einer Menge von 30 bis 90, bevorzugt 35 bis 80 und insbesondere bevorzugt 40 bis 75 Gew.-%, bezogen auf die Summe der Gewichtsprozente der Segmente P1.1 und P1.2.

Ferner weist das Pfropfcopolymerisat P1 vorzugsweise ein Hartsegment (P1.2) mit einer Glastemperatur von mindestens 11, bevorzugt mindestens 25 und besonders bevorzugt mindestens 60 °C in einer Menge von 10 bis 70, bevorzugt 20 bis 65 und besonders bevorzugt 35 bis 60 Gew.-% bezogen auf die Summe der Gewichtsprozente der Segmente P1.1 und P1.2 auf. Das Hartsegment P1.2 beinhaltet vorzugsweise ein vinylaromatisches Monomer als Monomer oder als eines von zwei oder mehr miteinander copolymerisierbaren Monomeren.

Ein weiteres erfindungsgemäßes Pfropfcopolymerisat (P2) beinhaltet ein Weichsegment (P2.1), vorzugsweise in einer Menge von 30 bis 90, bevorzugt 35 bis 80 und besonders bevorzugt 40 bis 75 Gew.-%, sowie ein Hartsegment (P2.2), vorzugsweise in einer Menge von 5 bis 50, bevorzugt 5 bis 35 und besonders bevorzugt 5 bis 30 Gew.-%, und ein weiteres Hartsegment (P2.3), vorzugsweise in einer Menge von 5 bis 50, bevorzugt 15 bis 45 und besonders bevorzugt 20 bis 40 Gew.-%. Die Gewichtsprozente der Segmente P2.1 bis P2.3 ergeben in ihrer Summe 100.

Erfindungsgemäß bilden die Segmente P1.1 sowie P2.1 vorzugsweise eine kernartige Pfropfgrundlage. Die Segmente P1.2 sowie P2.2 und P2.3 bilden auf die zuvor genannten Pfropfgrundlagen folgende Pfropfauflagen, wobei das Segment P2.3 wiederum als Pfropfauflage auf das die erste Pfropfauflage nach dem Kern bildende Segment P2.2 folgt.

Die Segmente P1.1 und P2.1 bestehen aus einem kautschukelastischen Material und besitzen vorzugsweise eine Glastemperatur von höchstens 0, bevorzugt von höchstens -20 °C. Als Kautschukmaterial dient bevorzugt ein vernetztes Acrylat- bzw. Acrylsäureester-Polymerisat mit einer Glasübergangstemperatur von 0, bevorzugt unter -20 °C. Als Kautschukmaterial können aber auch vernetzte Polydiene wie Polybutadien oder vernetzte Siliconkautschuke wie Polydimethoxysiloxan verwendet werden. Vorzugsweise sind die erfindungsgemäßen Pfropfgrundlagen P1.1 bzw. P1.2 frei von Monomeren, Vernetzern und Polymeren, die die darauffolgende(n) Pfropfauflage(n) bilden und zu deren Herstellung eingestzt werden.

Der Aufbau der Segmente P1.1 sowie P2.1 wird nun exemplarisch anhand des Aufbaus von P1.1 beschrieben, wobei gemäß der eingangs definierten Bezeichungsweise das gleiche für das Segment P2.1 gilt.

Das Segment P1.1 ist vorzugsweise aufgebaut aus
P1.1.1 50 bis 99,9, bevorzugt 55 bis 99 und besonders bevorzugt 60 bis 99 Gew.-% mindestens eines Alkylacrylats, Diens oder Alkylsiloxans,
P1.1.2 0,1 bis 10, bevorzugt 0,5 bis 5 und besonders bevorzugt 1 bis 3 Gew.-% mindestens eines Vernetzers und
P1.1.3 0 bis 49, bevorzugt 0 bis 45 und besonders bevorzugt 0 bis 40 Gew.-% eines weiteren, mit dem Monomeren P1.1.1 copolymerisierbaren Monomeren.

Als Acrylate, vorzugsweise mit höchstens 20 C-Atomen, bzw. Monomere P1.1.1 kommen Alkylacrylate, insbesondere Acrylsäureester mit 1 bis 8 Kohlenstoffatomen, insbesondere mit 2 bis 8 Kohlenstoffatomen im Alkylrest in Betracht. Als geeignet seien vor allem Acrylsäure-n-butylester und Acrylsäureethylhexylester genannt. Es können sowohl ein Acrylsäureester als auch mehrere verschiedene Acrylsäureester eingesetzt werden.

Als Vernetzer P1.1.2 werden vorzugsweise Verbindungen mit zwei oder mehr funktionellen Gruppen eingesetzt, bevorzugt sind darunter solche Verbindungen, die mindestens zwei zur Copolymerisation befähigte ethylenische Doppelbindungen enthalten.

Weitere erfindungsgemäße Vernetzer P1.1.2 können Verbindungen mit zwei oder mehr funktionellen Gruppen gleicher oder unterschiedlicher Reaktivität sein.

Verbindungen mit zwei oder mehr funktionellen Gruppen gleicher Reaktivität sind beispielsweise Di-, Trivinylbenzol, Butandioldiacrylat, Mono-, Di-, Trioder Tetra-Alkylenglykoldiacrylate, bevorzugt C₁- bis C₄-Mono-alkylenglycoldiacrylate wie Ethylenglykoldiacrylat, n-Propylenglycoldiacrylat, 1,3-n-Butylenglycoldiacrylat oder 1,4-n-Butylenglycoldiacrylat. Ebenso kommen Mono-, Di-, Tri- oder Tetra-alkylenglykoldimethacrylate in Betracht, bevorzugt C₁bis C₄-Mono-alkylenglykoldimethacrylate wie Ethylenglykoldimethacrylat, n-Propylenglycoldimethacrylat, 1,3-n-Butylenglycoldimethacrylat oder 1,4-n-Butylenglycoldimethacrylat. Acrylate oder Methacrylate von Glycerin, Trimethylolpropan, Pentaerythrit, Inosit oder ähnlicher Zuckeralkohole sind auch geeignete Vernetzer P1.1.2. Als weitere geeignete Vernetzer P1.1.2 sind Acryl- oder Methacrylamide von Ethylendiamin oder anderen aliphatischen Di- oder Polyaminen zu nennen. Darüber hinaus können Diallylmaleat, Diallylfumarat oder Diallylphthalat, Triacryl- oder Trimethacrylamide, Triallycyanurat oder Triallylisocyanurat sowie Trivinylbenzol als Vernetzer P1.1.2 verwendet werden.

Erfindungsgemäße Vernetzer mit zwei oder mehr funktionellen Gruppen unterschiedlicher Reaktivität, die auch pfropfaktive Comonomere bzw. Pfropfer genannt werden, sind Dihydrodicyclopentadienylacrylat (DCPA), das besonders bevorzugt als Vernetzer eingesetzt wird. DCPA kann sowohl alleine als auch zusammen mit Vernetzern mit zwei oder mehr funktionellen Gruppen gleicher oder unterschiedlicher Reaktivität eingesetzt werden. Als mit DCPA einsetzbare Vernetzer mit funktionellen Gruppen gleicher Reaktivität kommen die zuvor aufgeführten in Frage.

Weitere Vernetzer mit funktionellen Gruppen unterschiedlicher Reaktivität, die sowohl alleine, in Mischungen, jedoch bevorzugt mit DCPA eingesetzt werden, sind ethylenisch ungesättigte Monomere, die Epoxy-, Hydroxy-, Carboxyl-, Amino- oder Säureanhydridgruppen tragen. Hierzu zählen Hydroxyalkylacrylate oder Hydroxyalkylmethacrylate wie Hydroxy-C₁- bis C₁₀-alkyl- oder Hydroxy-C₁- bis C₁₀-methacrylate, insbesondere Hydroxyethylacrylat oder Hydroxy-n-propylacrylat. Vorzugsweise kommen Allylmethacrylat, Methallylmethacrylat, Acryloylalkoxysilane oder Methacryloylalkyloxysilane der allgemeinen Formel I

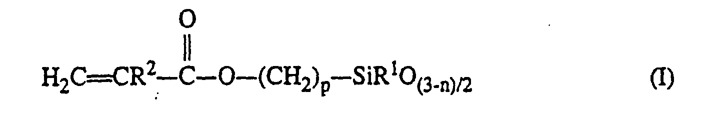

in Betracht, worin R¹ C₁- bis C₃- Alkyl oder Phenyl, bevorzugt Methyl bedeutet, R² Wasserstoff oder Methyl ist, n eine ganze Zahl von 0 bis 2 und p eine ganze Zahl von 1 bis 6, bevorzugt von 1 bis 4 darstellt. Als bevorzugte Beispiele seien genannt:
β-Methacryloyloxyethyldimethoxymethylsilan,
γ-Methacryloyloxy-n-propylmethoxydimethylsilan,
γ-Methacryloyloxy-n-propylmethoxymethylsilan,
γ-Methacryloyloxy-n-propyltrimethoxylsilan,
γ-Methacryloyloxy-n-propyldimethoxymethylsilan,
γ-Methacryloyloxy-n-propyldiethoxymethylsilan,
δ-Methacryloyloxy-n-butyldiethoxymethylsilan.

Zu den bevorzugten Mischungen von Vernetzern mit zwei oder mehr funktionellen Gruppen unterschiedlicher Reaktivität zählen vorzugsweise Dihydrodicyclopentadienylacrylat und Hydroxyethylacrylat; Dihydrodicyclopentadienylacrylat und Allylmethacrylat, Dihydrodicyclopentadienylacrylat, Hydroxyethylacrylat und Allylmethacrylat; Dihydrodicyclopentadienylacrylat, Allylmethacrylat und β-Methacrylolyloxyethyldimethoxymethylsilan; Dihydroxydicyclopentadienylacrylat und β-Methacrylolyloxyethyldimethoxymethylsilan.

Die Wahl der Vernetzer richtet sich danach, welche Gestalt das Netzwerk des Segments aufweisen soll. Ein kompaktes Netzwerk ergibt sich beispielsweise, wenn einer der vorangegangenen Vernetzer mit zwei oder mehr funktionellen Gruppen unterschiedlicher Reaktivität, vorzugsweise DCPA, mit Divinylbenzol verwendet wird, während ein relativ lockeres Netzwerk entsteht, wenn beispielsweise ein Vernetzer mit zwei oder mehr funktionellen Gruppen unterschiedlicher Reaktivität, vorzugsweise DCPA, mit Tetraethylenglykoldiacrylat oder -dimethylacrylat eingesetzt wird.

Zu den besonders bevorzugten Vernetzermischungen zählen Dihydrodicyclopentadienylacrylat und Butandioldiacrylat; Dihydrodicyclopentadienylacrylat und Divinylbenzol; Dihydrodicyclopentadienylacrylat und Ethylenglycoldiacrylat; sowie Dihydrodicyclopentadienylacrylat und Tetraethylenglycoldimethacrylat. Weitere bevorzugte Vernetzermischungen sind Dihydrodicyclopentadienylacrylat, Butandioldiacrylat und Allylmethacrylat; Dihydrodicyclopentadienylacrylat, Butandioldiacrylat und Hydroxyethylacrylat; Dihydrodicyclopentadienylacrylat, Butandioldiacrylat und Divinylbenzol; Dihydrodicyclopentadienylacrylat, Hydroxyethylacrylat und Divinylbenzol oder Diethylenglycoldiacrylat oder Tetraethylenglycoldimethacrylat; Dihydrodicyclopentadienylacrylat, Hydroxyethylacrylat, Allylmethacrylat und Divinylbenzol oder Diethylenglycoldiacrylat oder Tetraethylenglycoldimethacrylat; Dihydrodicyclopentadienylacrylat, Allylmethacrylat, β-Methacrylolyloxyethyldimethoxymethylsilan und Divinylbenzol oder Diethylenglycoldiacrylat oder Tetraethylenglycoldimethacrylat; Dihydroxydicyclopentadienylacrylat, β-Methacrylolyloxyethyldimethoxymethylsilan und Divinylbenzol oder Diethylenglycoldiacrylat oder Tetraethylenglycoldimethacrylat.

Als bevorzugte Monomere P1.1.3, die vorzugsweise bis zu 20 Kohlenstoffatome besitzen, seien Hydroxyalkylacrylate, (Meth)acrylsäure, Methylmethacrylat, Phenoxyethylacrylat, Isopren, Butadien, Styrol, Acrylnitril, Methacrylnitril sowie Vinylalkylether mit 1 bis 8 Kohlenstoffatomen im Alkylrest, beispielsweise Vinylmethylether, Vinylethylether oder Vinylpropylether genannt. Besonders bevorzugte Monomere P1.1.3 sind Butadien sowie Styrol. Die zuvor genannten Monomere P1.1.3 können sowohl alleine als auch in Mischung eingesetzt werden.

Die Hartsegmente P1.2 und P2.2 werden im folgenden anhand des Hartsegments P1.2 beschrieben, wobei die Ausführungen gleichfalls für das Hartsegment P2.2 gelten, wie sich aus der eingangs beschriebenen Bezeichnungsweise ergibt.

Vorzugsweise ist das Hartsegment P1.2 aufgebaut aus
P1.2.1) 50 bis 99,9, bevorzugt 65 bis 100 Gew.-% mindestens eines vinylaromatischen Monomeren,
P1.2.2) 0 bis 20, bevorzugt 0 bis 5 Gew.-% mindestens eines Vernetzers und
P1.2.3) 0,1 bis 50, bevorzugt 0 bis 35 Gew.-% mindestens eines mit P1.2.1 copolymerisierbaren Monomeren.

Erfindungsgemäße Monomere P1.2.1 sind vinylaromatische Monomeren mit vorzugsweise maximal 20 Kohlenstoffatomen, beispielsweise Styrol, α-Methylstyrol oder kernalkylierte Styrole, wie p-Methylstyrol oder p-t-Butylstyrol, wobei Styrol, α-Methylstyrol oder p-Methylstyrol oder deren Mischungen bevorzugt und besonders bevorzugt Styrol verwendet wird. Als Vernetzer P1.2.2 kommen die unter P1.1.2 beschriebenen Vernetzer und Vernetzerkombinationen sowie die dort als bevorzugt beschriebenen Verbindungen in Betracht. Monomere P1.2.3, vorzugsweise nicht vinylaromatische Monomere, sondern Acrylate und/oder Methacrylate mit bevorzugt maximal 20 Kohlenstoffatomen, sind beispielsweise Acrylnitril, Methacrylnitril, Acrylsäure, Methacrylsäure, Methylmethacrylat, Glycidylmethacrylat, Maleinsäureanhydrid, t-Butylacrylat oder Vinylmethylether sowie deren Mischungen. Erfindungsgemäß bevorzugte Monomere P1.2.3 mit maximal 10 Kohlenstoffatomen sind Acrylate und/oder Methacrylate, beispielsweise Acrylnitril und Methylmethacrylat.

Erfindungsgemäß ist es bevorzugt, daß die auf die Pfropfgrundlage P1.1 folgende Pfropfauflage P1.2 ein Hartsegment mit mindestens zwei, drei, vier oder fünf, bevorzugt zwei, drei oder vier und besonders bevorzugt zwei Bereichen ist, wobei der an die Pfropfgrundlage P1.1 angrenzende Bereich der darauffolgenden Pfropfgrundlage mindestens ein vinylaromatisches Monomer und der der Pfropfgrundlage abgewandte Bereich mindestens ein vinylaromatisches Monomer und ggf. mindestens ein damit copolymerisierbares Monomer aufweist.

Erfindungsgemäß besonders bevorzugt ist es, wenn der an die Pfropfgrundlage angrenzende Bereich der darauffolgenden Pfropfauflage P1.2 20 bis 70, vorzugsweise 10 bis 50, bevorzugt 10 bis 40 und besonders bevorzugt 15 bis 30 Gew.-% mindestens eines vinylaromatischen Monomeren P1.2.1 und der der Pfropfgrundlage abgewandte Bereich 30 bis 80, bevorzugt 50 bis 90, vorzugsweise 60 bis 90 und besonders bevorzugt 65 bis 85 Gew.-%, mindestens eines vinylaromatischen Monomeren P1.2.1 und ggf. mindestens eines damit copolymerisierbaren Monomeren P1.2.3 in einem Verhältnis P1.2.1 zu P1.2.3 von 95:5 bis 60:40, bevorzugt 80:20 bis 70:30 aufweist, wobei die Summe der Gewichtsprozente von P1.2.1 und P1.2.1 mit ggf. P1.2.3 100 ergibt.

Die Pfropfauflagen P1.2 sowie die die Pfropfauflagen bildenden Bereiche können einen Durchmesser von 1 bis 1000, bevorzugt 2 bis 500, vorzugsweise 3 bis 200 und besonders bevorzugt 5 bis 50 nm, aufweisen.

Der Durchmesser der Pfropfauflagen ergibt sich beispielsweise daraus, indem man bei im wesentlichen kugelförmigen Kern-Schale-Teilchen die mittlere Teilchengröße der Pfropfgrundlage von der Gesamtteilchengröße des aus einer Pfropfgrundlage und einer Pfropfauflage bestehenden Teilchens subtrahiert und diesen Wert wiederum durch 2 dividiert.

Die Zugabe von P1.2.1 mit P1.2.3 kann vorzugsweise, nachdem die Zugabe von 1/6, bevorzugt 1/3, besonders bevorzugt 1/2 und insbsonders bevorzugt 3/4 der Menge des zuerst einzusetzenden P1.2.1 erfolgt ist, einsetzen. Gleichfalls kann es erfindungsgemäß vorteilhaft sein, mit der Zugabe von P1.2.1 und P1.2.3 nach Beendigung der Zugabe von der zuerst eingesetzten Menge P1.2.1 zu beginnen. Weiterhin kann bei der Zugabe von P1.2.1 und/oder bei der von P1.2.1 mit P1.2.3 Vernetzer P1.2.2 zugegen sein.

Die Zugabegeschwindigkeit von P1.2.1 bzw. P1.2.1 mit P1.2.3 und gegebenenfalls P1.2.2 kann über die Dauer der Zugabe variieren; sie bleibt jedoch vorzugsweise konstant.

Während das erfindungsgemäße Pfropfcopolymer P1 vorzugsweise aus einem Weichsegment P1.1 als Pfropfgrundlage und einem Hartsegment P1.2 als Pfropfauflage besteht, wird das erfindungsgemäße Polymerisat P2 vorzugsweise aus einem Weichsegment P2.1 als Pfropfgrundlage und einem Hartsegment P2.2 als erste Pfropfauflage sowie einem weiteren Hartsegment P2.3 als zweite Pfropfauflage aufgebaut, wobei der Aufbau von P2.1 und P2.2 dem von P1.1 und P1.2 gleicht.

Das vorzugsweise die zweite Pfropfauflage bildende Hartsegment P2.3 besteht aus einem Material mit einer Glasübergangstemperatur von vorzugsweise mindestens 25, besonders bevorzugt mindestens 80 °C. Das Hartsegment P2.3 ist vorzugsweise aufgebaut aus
P2.3.1) 1 bis 99, bevorzugt 60 bis 90 Gew.-% mindestens eines vinylaromatischen Monomeren und
P2.3.2) 1 bis 99, bevorzugt 10 bis 40 Gew.-% mindestens eines mit P2.3.1 copolymerisierbaren Monomeren, bei dem es sich vorzugsweise um ein ethylenisch ungesättigtes Monomer handelt.

Im Gegensatz zu den die ersten Pfropfauflagen bildenden Hartsegmenten P1.2 und P2.2, die Vernetzer, jedoch auch keinen Vernetzer aufweisen können, weist das die zweite Pfropfauflage bildende Hartsegment P2.3 vorzugsweise keinen Vernetzer auf.

Bezüglich des vinylaromatischen Monomeren P2.3.1 gelten die vorangegangenen Ausführungen zu P1.2.1. Weiterhin gelten die Ausführungen zu P1.2.3 für P2.3.2.

In einer Ausführungsform weisen die aus den Weichsegmenten P1.1 bzw. P2.1 bestehenden kleinteiligen Pfropfgrundlagen der Pfropfcopolymerisate P1 bzw. P2 vorzugsweise eine mittlere Teilchengröße (d₅₀) von bis zu 150, bevorzugt 40 bis 120 und besonders bevorzugt 50 bis 100 nm auf.

In einer weiteren Ausführungsform können großteilige Pfropfgrundlagen aus den Weichsegmenten P1.1 bzw. P2.1 der entsprechenden Pfropfcopolymerisate P1 und P2 jedoch gleichfalls vorzugsweise eine mittlere Teilchengröße (d₅₀) von 100 bis 2.000, bevorzugt 350 bis 1.000 und besonders bevorzugt 400 bis 550 nm aufweisen.

Weitere erfindungsgemäße Pfropfcopolymerisate P1 und P2 können vorzugsweise eine mittlere Teilchengröße (d₅₀) von 40 bis 2.000, bevorzugt 50 bis 1.000 und besonders bevorzugt 60 bis 800 nm aufweisen.

Die kleinteiligen Pfropfcopolymerisate P1 und P2 können unabhängig voneinander vorzugsweise eine mittlere Teilchengröße (d₅₀) von 40 bis 200, bevorzugt 80 bis 180 und besonders bevorzugt 80 bis 120 nm aufweisen. Weiterhin können die erfindungsgemäßen großteiligen Pfropfcopolymerisate P1 und P2 gleichfalls vorzugsweise eine mittlere Teilchengröße (d₅₀) von 250 bis 2.000, bevorzugt 350 bis 1.000 und besonders bevorzugt 400 bis 800 nm aufweisen.

Bei der Angabe der mittleren Teilchengröße handelt es sich in allen Fällen um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972), Seiten 782-796, bestimmt werden. Die Ultrazentrifugenmessungen liefern die integrale Massenverteilung der Teilchendurchmesser einer Probe. Hieraus läßt sich entnehmen, wieviel Gewichtsprozent der Teilchen einen Teilchendurchmesser gleich oder kleiner einer bestimmten Größe besitzen. Der mittlere Teilchendurchmesser, der auch als d₅₀-Wert der integralen Massenverteilung bezeichnet wird, ist dabei als der Teilchendurchmesser definiert, bei dem 50 Gew.-% der Teilchen einen kleineren Durchmesser aufweisen als der Durchmesser, der dem d₅₀-Wert entspricht. Ebenso haben dann 50 Gew.-% der Teilchen einen größeren Durchmesser als der d₅₀-Wert.

Die Herstellung der erfindungsgemäßen Pfropfcopolymerisate P1 und P2 kann vorzugsweise nach bekannten Methoden erfolgen (siehe u.a. DE-PS 12 60 135, DE 23 11 129, DE 28 26 925, EP 81 761, EP 450 485, US 3,691,260).

Ein Verfahren zur Herstellung eines Pfropfcopolymerisates P1 ist vorzugsweise dadurch gekennzeichnet, daß die das Weichsegment P1.1 und das Hartsegment P1.2 bildenden Monomere und Vernetzer in Gegenwart von Emulgatoren in einem Temperaturbereich von 20 bis 100°C polymerisiert werden, wobei mit der Polymerisation der Pfropfgrundlage P1.1 vor der der Pfropfauflage P1.2 begonnen wird, wobei bei der Pfropfauflage P1.2 mit der Zugabe von mindestens einem vinylaromatischen Monomer vor der Zugabe von mindestens einem vinylaromatischen Monomer mit mindestens einem damit copolymerisierbaren Monomer begonnen wird.

Ein Verfahren zur Herstellung eines Pfropfcopolymerisates P2 gleicht vorzugsweise dem Verfahren zur Herstellung von P1, wobei mit der Polymerisation der Pfropfgrundlage P2.1 vor der der Pfropfauflage P2.2 begonnen wird, wobei bei der Pfropfauflage P2.2 mit der Zugabe von mindestens einem vinylaromatischen Monomer vor der Zugabe von mindestens einem vinylaromatischen Monomer mit mindestens einem damit copolymerisierbaren Monomer begonnen wird, und die Polymerisation der Pfropfauflage P2.3 nach dem Anfang der Polymerisation der Propfauflage P2.2 beginnt.

Vorzugsweise werden die Pfropfcopolymerisate P1 bzw. P2 hergestellt, indem die Pfropfauflage P1.2 bzw. P2.2 in mindestens zwei Stufen auf die Pfropfgrundlage P1.1 bzw. P1.2 aufpolymerisiert wird, wobei in einer ersten Stufe 20 bis 70, vorzugsweise 10 bis 50, bevorzugt 10 bis 40 und besonders bevorzugt 15 bis 35 Gew.-%, von P1.2.1 bzw. P2.2.1 und in einer zweiten Stufe 30 bis 80, vorzugsweise 50 bis 90, bevorzugt 60 bis 90 und besonders bevorzugt 65 bis 85 Gew.-% eines Gemisches der Monomeren P1.2.1 bzw. P1.2.3 und P2.2.1 bzw. P2.2.3 im Gewichtsverhältnis von 90:10 bis 60:40, bevorzugt 80:20 bis 70:30, verwandt werden.

Hierzu werden zunächst die die Pfropfgrundlagen P1.1 bzw. P2.1 bildenden Weichsegmente hergestellt. Die Weichsegmente lassen sich sowohl in einem als auch in mehreren Schritten, beispielsweise zwei, drei, vier, fünf oder sechs, bevorzugt zwei und drei und besonders bevorzugt zwei Schritten herstellen. Eine Ausführungsform der Ein-Schritt-Synthese des Weichsegments liegt dann vor, wenn entweder ein Vernetzer mit zwei oder mehr funktionellen Gruppen gleicher Reaktivität oder ein Vernetzer mit zwei oder mehr funktionellen Gruppen unterschiedlicher Reaktivität verwendet wird. In einer weiteren Ausführungsform können bei der Ein-Schritt-Synthese ein oder mehrere Vernetzer beider Gattungen verwendet werden. Gleichfalls können Weichsegmente durch eine Mehr-Schritt-Synthese hergestellt werden. Erfolgt die Synthese in einem Schritt, besitzt das Weichsegment in der Regel eine einheitliche Morphologie. Wenn die Synthese in mehreren Schritten durchgeführt wird, kann das Weichsegment eine Morphologie mit unterschiedlichen Bereichen aufweisen. In einer erfindungsgemäß bevorzugten Ausführungsform der Mehr-Schritt-Synthese wird zuerst ein Saatlatex aus den das Weichsegment bildenden Monomeren gegebenenfalls mit Vernetzer hergestellt, der in mindestens einem darauffolgenden Schritt mit weiterem Monomeren und gegebenenfalls mit weiterem Vernetzer zu der Pfropfgrundlage umgesetzt wird.

Als Pfropfgrundlagen werden die Acrylsäureester (P1.1.1 bzw. P2.1.1) und der oder die Vernetzer (P1.1.2 bzw. P2.1.2) sowie ggf. die Monomere (P1.1.3 bzw. P2.1.3) in wäßriger Emulsion bei 20 bis 100, bevorzugt 50 bis 80 und besonders bevorzugt 60 bis 70 °C polymerisiert. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise werden die Kalium- oder Natriumsalze von Alkylsulfonaten oder von Fettsäuren mit 10 bis 18 Kohlenstoffatomen verwendet. Es ist günstig, die Emulgatoren in einer Menge von 0,1 bis 5, bevorzugt von 0,2 bis 2 und besonders bevorzugt von 0,3 bis 1 Gew.-%, bezogen auf das Gesamtgewicht der für die Herstellung der Pfropfgrundlage verwendeten Monomere und Vernetzer, einzusetzen. Im allgemeinen wird bei einem Wasser/Monomer-Verhältnis von 2:1 bis 0,7:1 gearbeitet. Als Polymerisationsinitiatoren dienen insbesondere die gebräuchlichen Persulfate, wie beispielsweise Kaliumperoxodisulfat; Redoxsysteme sind jedoch gleichfalls geeignet. Die Menge an Initiatoren, beispielsweise 0,1 bis 25 Gew.-%, bezogen auf das Gesamtgewicht der Monomere, richtet sich in allgemein bekannter Weise nach dem gewünschten Molekulargewicht.

Als Polymerisationshilfsstoffe können die üblichen, dem Fachmann bekannten Puffersubstanzen, durch welche der pH-Wert von vorzugsweise 6 bis 9, bevorzugt 6,5 bis 8 und besonders bevorzugt 6,9 bis 7,3, eingestellt werden, beispielsweise Natriumbicarbonat und Natriumpyrophosphat, sowie bis zu 3 Gew.-%, bevorzugt bis zu 2 Gew.-%, eines Molekulargewichtsreglers, wie beispielsweise Mercaptane, Terpinol oder dimeres α-Methylstyrol, verwendet werden.

Die genauen Polymerisationsbedingungen, insbesondere Art, Dosierung und Menge des Emulgators, werden innerhalb der oben angegebenen Bereiche so gewählt, daß der erhaltene Latex der erfindungsgemäßen Weichsegmente P1.1 bzw. P1.2 eine im gewünschten Bereich liegende mittlere Teilchengröße (d₅₀) besitzt. Die großteiligen Pfropfcopolymerisate P1 bzw. P2 werden hierbei bevorzugt durch Verwendung von Latizes gewonnen.

Zur Herstellung der Hartsegmente P1,2 bzw. P2.2, die in den erfindungsgemäßen Pfropfcopolymerisaten P1 und P2 jeweils die erste Pfropfauflage bilden, wird zunächst in Gegenwart des Latex der die Pfropfgrundlagen bildenden Weichsegmente P1.1 bzw. P2.1 mindestens ein vinylaromatisches Monomer (P1.2.1 bzw. P2.2.1) polymerisiert. Die Aufpfropfung der die ersten Pfropfauflagen bildenden Weichsegmente kann vorzugsweise im gleichen System erfolgen, in dem die Emulsionspolymerisation zur Herstellung der Pfropfgrundlagen durchgeführt wurde. Es kann jedoch gleichfalls bevorzugt sein, weiteren Emulgator und Initiator zu der Aufpfropfung der ersten Pfropfauflage zuzugeben. Die die erste Pfropfauflage bildenden Monomere und die ggf. gleichfalls eingesetzten Vernetzer können unabhängig voneinander dem Reaktionsgemisch auf einmal, absatzweise in mehreren Stufen oder vorzugsweise kontinuierlich während der Polymerisation zugegeben werden. Die Polymerisation der die erste Pfropfauflage bildenden Monomere, vorzugsweise Styrol, und der oder die ggf. vorhandenen Vernetzer wird so durchgeführt, daß ein Pfropfgrad, definiert als das Gewichtsverhältnis von P1.2 durch die Summe von P1.1 und P1.2 bzw. P2.2 durch die Summe von P2.1 und P2.2 von 5 bis 45, vorzugsweise 10 bis 30 und besonders bevorzugt von 10 bis 25, in den entsprechenden Pfropfcopolymerisaten P1 und P2 beträgt.

Weiterhin ist erfindungsgemäß ein Verfahren zur Herstellung der Pfropfauflagen P1.2 bzw. P2.2 der Pfropfcopolymere P1 und P2 bevorzugt, in dem die Pfropfauflagen P1.2 bzw. P2.2 mindestens in zwei, jedoch auch in drei, vier oder fünf, bevorzugt jedoch in zwei Stufen hergestellt wird, wobei in der ersten Stufe 20 bis 70 Gew.-% eines Gemisches der Monomeren P1.2.1 bzw. P2.2.1 und P1.2.2 bzw. P.2.2.2 im Gewichtsverhältnis von 95:5 bis 60:40, vorzugsweise 80:20 bis 70:30, verwandt werden.

In einer weiteren Stufe wird auf das Pfropfcopolymerisat, das aus einer Pfropfgrundlage aus einem Weichsegment P2.1 und einem Hartsegment P2.2 besteht, ein weiteres Hartsegment P2.3 gepfropft, indem zu diesen ein Monomerengemisch aus mindestens einem vinylaromatischen Monomeren P2.3.1 und mindestens einem mit diesem copolymerisierbaren, bevorzugt ethylenisch ungesättigten Monomeren P2.3.2 im Verhältnis von P2.3.1 zu P2.3.2 von vorzugsweise 90:10 bis 60:40, bevorzugt 80:20 bis 65:35 zugegeben wird. Vorzugsweise wird die Herstellung der zweiten Pfropfauflage zweckmäßigerweise im gleichen System durchgeführt, in dem die Pfropfauflage P2.2 auf die Pfropfauflage P2.1 gepfropft wurde. Hierbei kann es vorteilhaft sein, weiteren Emulgator und Initiator zuzugeben. Bei dieser Polymerisation können vorzugsweise die gleichen Emulgatoren und Initiatoren verwendet werden, wie bei der vorangegangenen Polymerisation zur Aufpfropfung der ersten Pfropfauflage. Die Auswahl der möglichen Emulgatoren und Initatoren sowie Polymerisationshilfsstoffe etc. entspricht den bei der Herstellung der ersten Pfropfauflage genannten. Das zur Herstellung der zweiten Pfropfauflage verwendete Monomer bzw. die Monomergemische, vorzugsweise aus Styrol und Acrylnitril, können dem Reaktionsgemisch beispielsweise auf einmal, absatzweise in mehreren Stufen oder vorzugsweise kontinuierlich während der Polymerisation zugegeben werden. Der Pfropfgrad, definiert als Gewichtsprozent von P2.3 durch die Summe der Gewichtsprozente von P2.1, P2.2 und P2.3, wird durch die Führung der Polymerisationsreaktion so eingestellt, daß er vorzugsweise in einem Bereich von 10 bis 55 und besonders bevorzugt von 15 bis 45 im Pfropfcopolymerisat P2 sich ergibt.

Die Isolierung der Pfropfcopolymerisate P1 bzw. P2 kann beispielsweise dadurch erfolgen, daß ein teilchenförmiges Pfropfcopolymerisat durch Zugabe eines Elektrolyten, beispielsweise eines Metallhalogenids, bevorzugt eines Erdalkali- oder Alkalihalogenids, besonders bevorzugt eines Erdalkalichlorids, vorzugsweise als wäßrige Lösung zur Emulsion in einem Temperaturbereich von 50 bis 100, bevorzugt 70 bis 95 und besonders bevorzugt 80 bis 90 °C, isoliert und ggf. getrocknet wird.

Die erfindungsgemäßen Pfropfcopolymerisate P1 und P2 können sowohl alleine als auch in Mischung mit anderen Pfropfcopolymerisaten oder Copolymerisaten verwendet werden. Sie eignen sich als Schlagzähmodifizierer für thermoplastische Massen. Die erfindungsgemäßen Pfropfcopolymerisate P1 und P2 eignen sich insbesondere als Schlagzähmodifizierer für Thermoplaste, die eine Glasübergangstemperatur von 25 °C oder darüber, bevorzugt über 60 und besonders bevorzugt über 80 °C, aufweisen. Beispiele hierfür sind Polyvinylchlorid (PVC), Polymethylmethacrylat sowie Copolymerisate aus vinylaromatischen Monomeren und polaren, copolymerisierbaren, ethylenisch ungesättigten Monomeren.

Eine erfindungsgemäße Ausführungsform der Mischungen aus Pfropfcopolymerisaten enthält mindestens ein kleinteiliges Pfropfcopolymerisat P1 und/oder P2 (Mk).

Eine weitere Ausführungsform einer erfindungsgemäßen Mischung aus Pfropfcopolymerisaten enthält mindestens ein großteiliges Pfropfcopolymerisat P1 und/oder P2 (Mg).

Neben den erfindungsgemäßen Pfropfcopolymerisaten P1 und P2 können alle dem Fachmann bekannten Pfropfcopolymerisate, vorzugsweise mit schlagzähmodifizierender Wirkung, vorliegen. Als Pfropfcopolymerisate für die erfindungsgemäßen Mischungen kommen insbesondere Pfropfcopolymerisate bestehend aus einer Pfropfgrundlage und mindestens einer Pfropfauflage in Frage, bei denen die Pfropfgrundlage entweder weich oder hart ist und die Pfropfauflagen aus Weich- bzw. Hartsegmenten bestehen. Beispielhaft sei in diesem Zusammenhang auf die nachfolgend beschriebenen Pfropfcopolymerisate ii verwiesen.

In einer weiteren bevorzugten Ausführungsform liegt die erfindungsgemäße Mischung bimodal vor. Die erfindungsgemäßen kleinteiligen Pfropfcopolymerisate P1 bzw. P2 besitzen einen Q-Wert von < 0,9, bevorzugt < 0,5 und besonders bevorzugt zwischen 0 und 0,35. Die erfindungsgemäßen großteiligen Pfropfcopolymerisate P1 bzw. P2 haben einen Q-Wert von < 0,6, vorzugsweise < 0,3 und besonders bevorzugt zwischen 0 und 0,2. Der Q-Wert dient zur Charakterisierung der Breite der Teilchengrößenverteilung der Pfropfcopolymerisate. Zur Bestimmung des Q-Werts werden neben dem d₅₀-Wert (mittlere Teilchengröße) die aus der integralen Massenverteilung bestimmten d₁₀ und d₉₀-Werte herangezogen. Q entspricht (d₉₀-d₁₀)/d₅₀.

Erfindungsgemäße Mischungen (M1) enthalten mindestens zwei Pfropfcopolymerisate P1, die sich mindestens durch ihre mittlere Teilchengröße voneinander unterscheiden. Die Mischungen M1 können vorzugsweise zwei, drei, vier und fünf Pfropfcopolymerisate P1, die sich mindestens durch ihre mittlere Teilchengröße voneinander unterscheiden, enthalten, wobei Mischungen aus zwei verschiedenen Pfropfcopolymerisaten P1 besonders bevorzugt sind.

Die Mischungen M1 können gleichfalls aus Pfropfcopolymerisaten P1 bestehen, die sich neben der mittleren Teilchengröße in ihrer Monomer- bzw. Vernetzerzusammensetzung sowie in der Art der Phasenübergänge zwischen den einzelnen Segmenten, die die Pfropfgrundlage bzw. Pfropfauflage bilden, unterscheiden. Weiterhin können sich die in den Mischungen M1 verwendeten Pfropfcopolymerisate P1 neben der mittleren Teilchengröße der Pfropfcopolymerisate auch in der mittleren Teilchengröße der Pfropfgrundlage sowie durch unterschiedliche Pfropfauflagenschichtdicken unterscheiden.

Erfindungsgemäß besonders bevorzugte Mischungen M1 sind solche, die jeweils mindestens eines der zuvor genannten großteiligen Pfropfcopolymere P1 mit einem der zuvor genannten kleinteiligen Pfropfcopolymere P1 enthalten.

Erfindungsgemäße Mischungen (M2) enthalten mindestens zwei Pfropfcopolymerisate P2, die sich mindestens durch ihre mittlere Teilchengröße voneinander unterscheiden. Die Mischungen M2 können vorzugsweise zwei, drei, vier und fünf Pfropfcopolymerisate P2, die sich mindestens durch ihre mittlere Teilchengröße voneinander unterscheiden, enthalten, wobei Mischungen aus zwei verschiedenen Pfropfcopolymerisaten P2 besonders bevorzugt sind.

Die Mischungen M2 können gleichfalls aus Pfropfcopolymerisaten P2 bestehen, die sich neben der mittleren Teilchengröße in ihrer Monomer- bzw. Vernetzerzusammensetzung sowie in der Art der Phasenübergänge zwischen den einzelnen Segmenten, die die Pfropfgrundlage bzw. Pfropfauflage bilden, unterscheiden. Weiterhin können sich die in den Mischungen M2 verwendeten Pfropfcopolymerisate P2 neben der mittleren Teilchengröße der Pfropfcopolymerisate auch in der mittleren Teilchengröße der Pfropfgrundlage sowie durch unterschiedliche Pfropfauflagenschichtdicken unterscheiden.

Erfindungsgemäß besonders bevorzugte Mischungen M2 sind solche, die jeweils mindestens eines der zuvor genannten großteiligen Pfropfcopolymere P2 mit einem der zuvor genannten kleinteiligen Pfropfcopolymere P2 enthalten.

Erfindungsgemäße Mischungen M3 enthalten mindestens jeweils eines der Pfropfcopolymerisate P1 und P2. Erfindungsgemäß bevorzugte Mischungen M3 enthalten eins, zwei, drei und vier verschiedene Pfropfcopolymerisate P1 und eins, zwei, drei und vier verschiedene Pfropfcopolymerisate P2. Bevorzugte Mischungen M1 enthalten ein Pfropfcopolymerisat P1 und ein Pfropfcopolymerisate P2. Erfindungsgemäße Mischungen M3 können mindestens ein Pfropfcopolymerisat P1 mit den zuvor angegebenen mittleren Teilchengrößen (d₅₀) für das Pfropfcopolymerisat P1 bzw. für die in dem Pfropfcopolymerisat P1 enthaltene Pfropfgrundlage P1.1 und mindestens ein Pfropfcopolymerisat P2 mit den zuvor angegebenen mittleren Teilchengrößen (d₅₀) für das Pfropfcopolymerisat P2 bzw. für die Pfropfgrundlage P2.1 enthalten.

Eine Ausführungsform der Mischung M3 beinhaltet mindestens eines der zuvor genannten kleinteiligen Pfropfcopolymerisate P1 sowie mindestens eines der zuvor genannten großteiligen Pfropfcopolymerisate P2.

Eine weitere Ausführungsform der Mischung M3 weist mindestens eines der zuvor genannten Pfropfcopolymerisate P1 sowie mindestens eines der zuvor genannten kleinteiligen Pfropfcopolymerisate P2 auf.

Andere Ausführungsformen der Mischung M3 weisen jeweils mindestens eines der zuvor genannten kleinteiligen Pfropfcopolymerisate P1, P2 auf.

Ferner beinhaltet eine Ausführungsform der Mischung M3 jeweils mindestens eines der zuvor genannten großteiligen Pfropfcopolymerisate P1 und P2.

Das zu den erfindungemäßen Mischungen von Pfropfcopolymerisaten führende Herstellungsverfahren ist im wesentlichen dadurch charakterisiert, daß die beiden Pfropfcopalymerisate in einem üblichen Extruder bei Temperaturen von 200 bis 300, bevorzugt 220 bis 280 °C, und bei einer mittleren Verweilzeit von 0,1 bis 100, bevorzugt von 0,5 bis 5 und besonders bevorzugt von 0,5 bis 3 min, miteinander vermischt werden.

Die erfindungsgemäßen Pfropfcopolymerisate P1 und P2 und/oder die erfindungsgemäßen Mischungen M1 bis M3 können sowohl alleine als auch in Mischung mit anderen Pfropfcopolymerisaten oder Copolymerisaten verwendet werden. Sie eignen sich als Schlagzähmodifizierer für thermoplastische Massen. Die erfindungsgemäßen Pfropfcopolymerisate und/oder Mischungen eignen sich insbesondere als Schlagzähmodifizierer für Thermoplaste, die eine Glastemperatur von mindestens 25, bevorzugt von mindestens 60 und besonders bevorzugt von mindestens 80 °C aufweisen. Beispiele sind Polyvinylchlorid (PVC), Polymethylmethacrylat sowie Copolymerisate aus vinylaromatischen Monomeren und polaren copolymerisierbaren, ethylenisch ungesättigten Monomeren sowie deren Mischungen.

Besonders bevorzugte Copolymerisate sind Styrol-Acrylnitril-Copolymerisate oder α-Methylstyrol-Acrylnitril-Copolymerisate. Zuätzlich können die thermoplastischen, ebenfalls erfindungsgemäßen Massen andere Thermoplaste, insbesondere Polycarbonate, enthalten.

Zu den bevorzugten thermoplastischen Massen (T1) zählen die, die
i) 0 - 95, bevorzugt 5 - 90 Gew.-% mindestens eines der Pfropfcopolymere P1 und P2 und/oder mindestens eine der Mischungen Mg und Mk sowie M1 bis M3,
ii) 0 - 90, bevorzugt 5 - 90 Gew.-% mindestens eines von i verschiedenen Pfropfcopolymerisats und/oder Mischung,
iii) 5 - 95, bevorzugt 5 - 90 Gew.-% mindestens eines Copolymerisats aus
   iii.1) 50 - 100 Gew.-% mindestens eines vinylaromatischen Monomeren, C₁- bis C₁₈-Alkylacrylats, C₁- bis C₁₈-Alkylmethacrylats oder deren Mischung und
   iii.2) 0 - 50 Gew.-% Acrylnitril, Methacrylnitril, Maleinsäureanhydrid, N-substituierten Maleimiden oder deren Mischungen, wobei die Summe der Gew.-% von iii.1 und iii.2 100 ergibt,
iv) 0 - 90 Gew.-% mindestens eines Polycarbonats und
v) 0 - 50 Gew.-% Zusatzstoffe
beinhalten, wobei die Summe der Gew.-% von i bis v 100 ergibt.

Erfindungsgemäß besonders bevorzugte thermoplastische Massen weisen mindestens eines der kleinteilige Pfropfcopolymerisate P1 und/oder P2 und/oder Mischungen mit mindestens einem kleinteiligen Pfropfcopolymerisat P1 und/oder P2 auf.

In einer weiteren erfindungsgemäßen Ausführungsform der thermoplastischen Massen ist mindestens ein kleinteiliges Pfropfcopolymerisat P1 oder P2 enthalten.

Nach einer bevorzugten Ausführungsform enthalten thermoplastische Massen 10 - 70 Gew.-% mindestens eines Pfropfcopolymerisates P1 (Komponente i.1), 10 - 70 Gew.-% mindestens eines Pfropfcopolymerisates P2 (Komponente i.2), 20 - 89,9 Gew.-% mindestens eines Copolymerisates iii und 0,1 - 20 Gew.-% Zusatzstoffe.

Die Verarbeitung erfolgt durch Extrudieren, Kneten oder Walzen aller Komponenten i - v in dazu üblichen Vorrichtungen, beispielsweise in Extrudern, Knetern, Walzen oder Mahlapparaturen, wobei die Verarbeitungsreihenfolge der Komponenten beliebig ist.

Die Pfropfcopolymerisate P1 und P2 können in jeder beliebigen Kombination oder für sich alleine als Massen verwendet werden. Hierzu können sie beispielsweise durch Sprühtrocknung aufgearbeitet werden.

Bevorzugte Pfropfcopolymerisate ii sind aufgebaut aus einer Pfropfgrundlage aus einem Material mit einer Glasübergangstemperatur von mindestens 25, bevorzugt mindestens 80 und insbesondere von 80 - 130 °C, d.h. einem harten, nicht elastischen Material. Diese Pfropfcopolymerisate ii beinhalten zwei oder mehr Pfropfauflagen, bevorzugt enthalten sie nicht mehr als drei Pfropfauflagen.

### Bevorzugte Pfropfcopolymerisate ii beinhalten

ii.1) 5 - 90 Gew.-% einer Pfropfgrundlage aus einem Material mit einer Glasübergangstemperatur von mindestens 25 °C aus
   ii. 1.1) 50 - 99,9 Gew.-% mindestens eines vinylaromatischen Monomeren,
   ii.1.2) 0 - 49,9 Gew.-% mindestens eines mit ii. 1.1 copolymerisierbaren Monomeren und
   ii.1.3) 0,1 - 10 Gew.-% mindestens eines Vernetzers und
ii.2) 4,9 - 90 Gew.-% einer Pfropfauflage aus einem Material mit einer Glastemperatur von höchstens 0 °C aus
   ii.2.1) 50 - 100 Gew.-% mindestens eines C₁- bis C₁₈-Alkylacrylats, Diens oder Dialkylsiloxans,
   ii.2.2) 0 - 50 Gew.-% mindestens eines mit den Monomeren ii.2.1 copolymerisierbaren Monomeren und
   ii.2.3) 0 - 20 Gew.-% mindestens eines Vernetzers und
ii.3) 0,1 - 85 Gew.-% einer zweiten Pfropfauflage aus einem Material mit einer Glasübergangstemperatur von mindestens 25 °C aus
   ii.3.1) 50 - 100 Gew.-% mindestens eines vinylaromatischen Monomeren,
   ii.3.2) 0 - 50 Gew.-% mindestens eines mit dem Monomeren ii.3.1 copolymerisierbaren Monomeren und
   ii.3.3) 0 - 20 Gew.-% mindestens eines Vernetzers und
ii.4) 5 - 90 Gew.-% einer dritten Pfropfauflage aus einem Material mit einer Glastemperatur von mindestens 25 °C aus
   ii.4.1) 1 - 99 Gew.-% mindestens eines vinylaromatischen Monomeren und
   ii.4.2) 1 - 99 Gew.-% mindestens eines mit dem Monomeren ii.4.1) copolymerisierbaren Monomeren, wobei die Summen der Gew.-% der einzelnen Komponentengruppen jeweils 100 ergeben sollte.

### Besonders bevorzugte Pfropfcopolymerisate ii enthalten

5 - 20 Gew.-% ii.1,
40 - 65 Gew.-% ii.2,
10 - 25 Gew.-% ii.3 und
10 - 40 Gew.-% ii.4,
wobei die Summe der Komponenten ii.1 bis ii.4 100 ergibt.

Bevorzugt ist die Pfropfgrundlage ii.1 aufgebaut aus 60 - 99,8, insbesondere 70 - 99,5 Gew.-% ii.1.1, 0 - 39,8, insbesondere 0 - 29,5 Gew.-% ii.1.2 sowie 0,1 - 10, insbesondere 0,5 - 3 Gew.-% ii.1.3.

Bevorzugte Pfropfcopolymerisate ii sind aufgebaut aus einer Pfropfgrundlage aus einem Material mit einer Glastemperatur von höchstens 0, bevorzugt höchstens -10 und insbesondere von -30 °C, d.h. einem weichen, elastischen Material. Diese Pfropfcopolymerisate ii beinhalten zwei oder mehr Pfropfauflagen, bevorzugt enthalten sie nicht mehr als drei Pfropfauflagen.

### Weitere bevorzugte Pfropfcopolymerisate ii beinhalten

ii.1) 4,9 - 94.9 Gew.-% einer Pfropfauflage aus einem Material mit einer Glastemperatur von höchstens 0 °C aus
   ii.1.1) 50 - 100 Gew.-% mindestens eines C₁- bis C₁₈-Alkylacrylats, Diens oder Dialkylsiloxans,
   ii.1.2) 0 - 50 Gew.-% mindestens eines mit den Monomeren ii.2.1 copolymerisierbaren Monomeren und
   ii.1.3) 0 - 20 Gew.-% mindestens eines Vernetzers und
ii.2) 0,1 - 85 Gew.-% einer zweiten Pfropfauflage aus einem Material mit einer Glasübergangstemperatur von mindestens 25 °C aus
   ii.2.1) 50 - 100 Gew.-% mindestens eines vinylaromatischen Monomeren,
   ii.2.2) 0 - 50 Gew.-% mindestens eines mit dem Monomeren ii.3.1 copolymerisierbaren Monomeren und
   ii.2.3) 0 - 20 Gew.-% mindestens eines Vernetzers und
ii.3) 5 - 90 Gew.-% einer dritten Pfropfauflage aus einem Material mit einer Glastemperatur von mindestens 25 °C aus
   ii.3.1) 1 - 99 Gew.-% mindestens eines vinylaromatischen Monomeren und
   ii.3.2) 1 - 99 Gew.-% mindestens eines mit dem Monomeren ii.3.1) copolymerisierbaren Monomeren, wobei die Summen der Gew.-% der einzelnen Komponentengruppen jeweils 100 ergeben sollte.

### Weitere besonders bevorzugte Pfropfcopolymerisate ii enthalten

5 - 50 Gew.-% ii.1,
40 - 65 Gew.-% ii.2,
10 - 30 Gew.-% ii.3,
wobei die Summe der Komponenten ii.1 bis ii.3 100 ergibt.

Bevorzugt ist die Pfropfgrundlage ii.1 aufgebaut aus 60 - 99,8, insbesondere 70 - 99,5 Gew.-% ii.1.1, 0 - 39,8, insbesondere 0 - 29,5 Gew.-% ii.1.2 sowie 0,1 - 10, insbesondere 0,5 - 3 Gew.-% ii.1.3.

Für Monomer-, Vernetzerauswahl und Herstellungsverfahren sowie mittleren Teilchendurchmesser etc. gelten die vorangegangenen Ausführungen für Weich- und Hartsegmente mit analogem Aufbau. Die Pfropfcopolymerisate ii können nach an sich bekannten Methoden hergestellt werden, so daß hier beispielsweise auf die EP-A-450 485 verwiesen wird.

In der Regel bilden Massen, die nur die Komponenten i und ii enthalten, eine bimodale Teilchenmischung.

Neben den Komponente i und ii können die Massen als Komponente iii ein oder mehrere Copolymerisate in Mengen von bevorzugt 5 - 95 Gew.-%, bezogen auf die Komponenten i bis v, enthalten. Bevorzugte Formmassen enthalten 20 - 79,9, insbesondere 40 - 74,9 Gew.-%, bezogen auf die Komponente i bis v, der Komponente iii.

Bevorzugte Copolymerisate beinhalten 60 - 80 Gew.-%, bezogen auf die Komponenten iii.1 und iii.2, an Monomeren iii.1 sowie 20 - 40 Gew.-%, bezogen auf die Komponente iii.1 und iii.2, an Monomeren iii.2.

Bevorzugte Copolymerisate iii sind solche, die aus wenigstens einem Monomeren aus der Gruppe Styrol, α-Methylstyrol, kernsubstituierte Styrole wie p-Methylstyrol und Methylmethacrylat, copolymerisiert mit wenigstens einem Monomeren aus der Gruppe Acrylnitril, Methacrylnitril und Maleinsäureanhydrid, bestehen.

Besonders bevorzugte Copolymerisate iii sind solche aus Styrol, Acrylnitril und ggf. Methylmethacrylat. Andere besonders bevorzugte Copolymerisate iii enthalten α-Methylstyrol, Acrylnitril und ggf. Methylmethacrylat. Daneben sind Copolymerisate iii aus Styrol, α-Methylstyrol sowie Acrylnitril und ggf. Methylmethacrylat besonders bevorzugt. Des weiteren zählen Copolymerisate aus Styrol und Maleinsäureanhydrid zu den besonders bevorzugten Copolymerisaten iii. Die Copolymerisate iii sind in der Regel harzartig, thermoplastisch und kautschukfrei.

In einer weiteren Ausführungsform sind die thermoplastischen Massen und die darin befindlichen Bestandteile, insbesondere die erfindungsgemäßen Pfropfcopolymerisate und deren Mischungen sowie die Komponenten ii und iii, kautschuk-, insbesondere dienkautschuk- und besonders bevorzugt butadien- und/oder isoprenkautschukfrei, um der DIN 16777/2 bzw. ISO6402/1 zu entsprechen.

Die Copolymerisate iii sind an sich bekannt oder lassen sich durch an sich bekannte Methoden, beispielsweise radikalische Polymerisation, insbesondere durch Emulsions-, Suspensions-, Lösungs- oder Massepolymerisation herstellen. Sie weisen im allgemeinen Viskositätszahlen im Bereich von 40 - 60, vorzugsweise 60 - 100 ml/g auf. Dieses entspricht Molekulargewichten (Gewichtsmittelwert) Mw zwischen 50.000 und 250.000 g/mol. Gleichfalls können die Copolymerisate iii ein Molekulargewicht zwischen 1500 bis 50.000 g /mol aufweisen. Zudem können die Copolymerisate iii vorzugsweise als Mischung der niedermolekularen Copolymerisate iii mit einem Molekulargewicht von 1500 bis 50.000 g/mol alleine oder in Mischung mit den hochmolekularen Copolymeren iii mit einem Molekulargewicht zwischen 50.000 und 250.000 g/mol vorliegen.

Die Copolymerisate iii entstehen auch häufig bei der Pfropfcopolymerisation zur Herstellung der erfindungsgemäßen Pfropfcopolymerisate P1 bis P5 als Nebenprodukte, besonders dann, wenn große Mengen Monomere auf kleine Mengen Pfropfgrundlage gepfropft werden.

Als Komponente iv können die Massen 0 - 90, bevorzugt 0 -80 Gew.-% mindestens eines Polycarbonates enthalten.

Die Polycarbonate iv sind an sich bekannt und in der Literatur beschrieben.

Vorzugsweise können diese Polycarbonate durch Umsetzung von Kohlensäurederivaten wie Phosgen oder Diphenylcarbonat mit Diphenolen hergestellt werden. Grundsätzlich sind alle Diphenole verwendbar, wie sie beispielsweise in der Monographie von H. Schnell, "Chemistry and Physics of Polycarbonates", Interscience Publishers, 1964, sowie in der US-A-2 999 835 und in der DE-A-22 48 817 genannt sind.

Dihydroxydiphenyl, Di-(hydroxyphenyl)alkane und Di-(hydroxyphenyl)ether oder deren Mischung sind besonders bevorzugte Diphenole.

Geeignete Diphenole sind beispielsweise 1,3-Dihydroxybenzol, 1,4-Dihydroxybenzol, 2,6-Dihydroxynaphthalin, Di-(4-hydroxyphenyl)methan, 1,1-Di-(4'hydroxyphenyl)ethan, 2,2-Di-(4'-hydroxyphenyl)propan (Bisphenol A), 2,2-Di-(3'-chlor-4'-hydroxyphenyl)propan, 2,2-Di-(3',5'-dichlor-4'-hydroxyphenyl)propan, 2,2-Di-(3',5'-dibrom-4'-hydroxyphenyl)propan, 2,2-Di-(3',5'-dimethyl-4'hydroxyphenyl)propan, 2,4-Di-(4'-hydroxyphenyl)-2-methylbutan, Di-(4'-hydroxyphenyl)pentan, 1,1-Di-(4'-hydroxyphenyl)cyclohexan, 4,4'-Dihydroxydiphenylsulfon, 4,4'-Dihydroxydiphenylsulfit oder 4,4'-Dihydroxydiphenylether.

Besonders bevorzugtes Diphenol ist Bisphenol A sowie dessen Mischungen mit anderen Diphenolen. Der Anteil an Bisphenol A in derartigen Mischungen liegt im allgemeinen im Bereich von 70 - 98 Gew.-%.

Es können sowohl Homopolymerisate als auch Copolymerisate aus Mischungen unterschiedlicher Diphenole eingesetzt werden. Darüber hinaus können auch Blockcopolymerisate wie Diorganosiloxan-haltige Polycarbonate verwendet werden.

Die Polycarbonate iv können durch den Einbau von geringen Mengen, beispielsweise von 0,05 bis 2 mol-%, bezogen auf die Summe der eingesetzten Diphenole, an drei oder mehr als drei funktionellen Verbindungen, wie solchen mit drei oder mehr phenolischen OH-Gruppen, verzweigt sein.

Verfahren zur Herstellung von Polycarbonaten iv sind an sich bekannt. So können die Polycarbonate beispielsweise in heterogener Phase, dem sogenannten Phasengrenzflächenverfahren, oder in homogener Phase, dem sogenannten Pyridinverfahren, hergestellt werden. Verfahren zur Herstellung von Polycarbonat sind beispielsweise in den DE-A-22 48 817, 13 00 266, 14 95 739, 33 34 782 sowie der US-A-2 999 835 beschrieben.

Die relative Viskosität der Polycarbonate iv liegt im allgemeinen im Bereich von 1,2 - 1,5, vorzugsweise 1,28 - 1,4 dl/g, gemessen in 0,5 gew.-%iger Lösung in Dichlormethan bei 25 °C.

Die thermoplastischen Massen können als Komponente v Zusatzstoffe enthalten. Deren Anteil beträgt im allgemeinen von 0 - 50, vorzugsweise von 0,1 - 20 Gew.-%, bezogen auf das Gesamtgewicht der Komponenten i bis v.

Übliche Zusatzstoffe sind beispielsweise Glasfasern, Flammschutzmittel, Stabilisatoren und Oxidationsverzögerer, Mittel gegen Wärmezersetzung und Zersetzung durch ultraviolettes Licht, Gleit- und Entformungsmittel, Farbstoffe und Pigmente oder Weichmacher.

Es können Glasfasern aus E-, A- oder C-Glas verwendet werden. Meist sind die Glasfasern mit einer Schlichte und einem Haftvermittler ausgerüstet. Der Durchmesser der Glasfaser liegt im allgemeinen zwischen 6 und 20 µm. Es können sowohl Endlosfasern (rovings) als auch Schnittglasfasern mit einer Länge von 1 - 10, bevorzugt 3 - 6 mm, eingearbeitet werden.

Pigmente und Farbstoffe sind allgemein in Mengen bis zu 6, bevorzugt 0,5 - 5 und insbesondere bevorzugt 0,5 - 3 Gew.-%, bezogen auf die Komponenten i bis v, enthalten.

Die Pigmente zur Einfärbung von Thermoplasten sind allgemein bekannt, siehe beispielsweise R. Gächter und H. Müller, Taschenbuch der Kunststoffadditive, Carl Hanser Verlag, 1983, S. 494 - 510. Als erste bevorzugte Gruppe von Pigmenten sind Weißpigmente zu nennen, beispielsweise Zinkoxid, Zinksulfid, Bleiweiß (2 PbCO₃ · Pb(OH)₂), Lithophone, Antimonweiß und Titandioxid. Von den beiden gebräuchlichsten Kristallmodifikationen (Rutil- und Anatas-Typ) des Titandioxids wird insbesondere die Rutilform zur Weißfärbung der Formmassen verwendet.

Schwarze Farbpigmente, die eingesetzt werden können, sind beispielsweise Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnance- oder Gasruß eingesetzt wird (siehe hierzu G. Benzing, Pigmente für Anstrichmittel, Expert-Verlag (1988) S. 78ff).

Selbstverständlich können zur Einstellung bestimmter Farbtöne anorganische Buntpigmente wie Chromoxidgrün oder organische Buntpigmente wie Azopigmente oder Phthalocyanine eingesetzt werden. Derartige Pigmente sind allgemein im Handel erhältlich.

Oxidationsverzögerer und Wärmestabilisatoren, die den erfindungsgemäßen thermoplastischen Massen zugesetzt werden können, sind beispielsweise Halogenide von Metallen der Gruppe I des Periodensystems, beispielsweise Natrium-, Kalium-, Lithium-Halogenide, ggf. in Verbindung mit Kupfer-(I)-Halogeniden, beispielsweise Chloriden, Bromiden oder Iodiden. Die Halogenide, insbesondere des Kupfers, können auch noch elektronenreiche π-Liganden enthalten. Als Beispiele derartiger Kupferkomplexe seien Cu-Halogenid-Komplexe mit beispielsweise Triphenylphosphin genannt. Weiterhin können Zinkfluorid oder Zinkchlorid verwendet werden. Ferner sind sterisch gehinderte Phenole, Hydrochinone, substituierte Vertreter dieser Gruppe, sekundäre aromatische Amine, ggf. in Verbindung mit phosphorhaltigen Säuren, beispielsweise deren Salze, und Mischungen dieser Verbindungen, vorzugsweise in Konzentrationen bis zu 1 Gew.-%, bezogen auf die Komponenten i bis v, einsetzbar.

Beispiele für UV-Stabilisatoren sind verschiedene substituierte Resorcine, Salicylate, Benzotriazole und Benzophenone, die im allgemeinen in Mengen von bis zu 2 Gew.-%, bezogen auf die Komponenten i bis v, eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, beispielsweise Distearylketon, eingesetzt werden.

Beispiele für Weichmacher sind Dialkylphthalate, beispielsweise Dioctylphthalat.

Die thermoplastischen Massen können vorzugsweise nach an sich bekannten Verfahren hergestellt werden, indem man die Komponenten in üblichen Mischvorrichtungen, beispielsweise Schneckenextrudern, Brabender-Mühlen oder Banbury-Mühlen mischt und anschließend extrudiert. Nach der Extrusion wird das Extrudat abgekühlt und zerkleinert. Die thermoplastischen Massen zeichnen sich durch hohe Schlagzähigkeit, insbesondere bei tiefen Temperaturen, aus. Gleichzeitig weisen die thermoplastischen Massen eine hohe Witterungs- und Alterungsbeständigkeit auf. Außerdem lassen sie sich gut einfärben. Thermoplastische Massen mit erfindungsgemäßen kleinteiligen Pfropfcopolymerisaten, die vorzugsweise eine mittlere Teilchengröße (d₅₀) von höchstens 200 nm besitzen, weisen insbesondere eine Unabhängigkeit der mechanischen Eigenschaften von der Verarbeitungstemperatur vorzugsweise bei gleichbleibenden oder besseren weiteren Eigenschaften, insbesondere der Einfärbbarkeit, auf.

Sie lassen sich zu Formkörpern, Folien, Beschichtungen oder Fasern verarbeiten. Sie können auch beispielsweise mittels bekannter Co-Extrusionsverfahren in Form von Schichten (bevorzugt Schichtdicken im Bereich von 100 µm bis 10 mm) auf Oberflächen, bevorzugt auf Thermoplaste wie Styrol-Acrylnitril-Copolymere, Acrylnitril-Butadien-Styrol-Terpolymere (ABS), Methylmethacrylat-Butadien-Styrol (MABS), Polystyrol, schlagzähes Polysryrol (HIPS) oder PVC aufgebracht werden. Die Massen können beispielsweise im Automobilsektor, Haushaltsbereich und für Freizeitartikel eingesetzt werden. So können sie beispielsweise zu Automobilteilen, Straßenschildern, Fensterprofilen, Lampenabdeckungen, Gartenmöbeln, Booten, Surfbrettern oder Kinderspielzeug verarbeitet werden.

Eine erfindungsgemäß bevorzugte Ausführungsform des Pfropfcopolymerisats P1 weist eine mittlere Teilchengröße (d₅₀) von 40 bis 200, bevorzugt 50 bis 150 nm, auf und besteht aus
P1.1) 30 bis 90, vorzugsweise 35 bis 80 und besonders bevorzugt 45 bis 75 Gew.-%, aus einer Pfropfgrundlage mit einer Glastemperatur von höchstens 0 °C, die wiederum
   P1.1.1) 50 bis 99,9, vorzugsweise 55 bis 99 und insbesondere 60 bis 99 Gew.-% mindestens eines Alkylacrylats,
   P1.1.2) 0,1 bis 10 Gew.-% mindestens eines Vernetzers und
   P1.1.3) 0 bis 49, vorzugsweise 0 bis 45 und besonders bevorzugt 0 bis 40 Gew.-% mindestens eines weiteren mit P1.1 copolymerisierbaren Monomeren aufweist,
   und
P1.2) 10 bis 70, bevorzugt 20 bis 65 und besonders bevorzugt 35 bis 60 Gew.-%, einer auf die Pfropfgrundlage P1.1 gepfropfte Pfropfauflage mit einer Glastemperatur von mindestens 25 °C, bestehend aus einem vinylaromatischen Monomeren P1.2.1 und einem damit copolymerisierbaren Monomeren P1.2.2, wobei die Pfropfauflage P1.2 in zwei Stufen synthetisiert wird, indem in einer ersten Stufe 20 bis 70 Gew.-% der Monomere P1.2.1 und in einer zweiten Stufe 30 bis 80 Gew.-% eines Gemisches der Monomere P1.2.1 und P1.2.2 im Gewichtsverhältnis von 90:10 bis 60:40 polymerisiert werden.

Eine weitere erfindungsgemäße Ausführungsform des Pfropfcopolymerisats P2 liegt vor, wenn auf die zuvor genannte Ausführungsform eine weitere Pfropfauflage (P2.3) kommt, die mindestens ein vinylaromatisches Monomer (P2.3.1) und mindestens ein damit polymerisierbares Monomer (P2.3.2) aufweist.

### BEISPIELE

### Anwendungstechnische Prüfungen

Die Teilchengrößen (Gewichtsmittelwerte d₅₀) wurden mittels einer analytischen Ultrazentrifuge entsprechend der in W. Scholtan, H. Lange, Kolloid-Z. und Z.-Polymere 250 (1972), Seiten 782 bis 796 beschriebenen Methode bestimmt.

Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Masseverteilung bezeichnet wird, ist dabei als der Wert definiert, bei dem 50 Gew.-% der Teilchen einen kleineren und 50 Gew.-% der Teilchen einen größeren Durchmesser als der d₅₀-Wert aufweisen.

Die Kerbschlagzähigkeiten (aₖ [kJ/m²]) wurden bei den angegebenen Temperaturen gemäß ISO179/1eA an gespritzten und anschließend gefrästen (A-Kerbe) Normkleinstäben gemessen.

Die Schlagzähigkeiten (aₙ[kJ/m²] wurden nach ISO179/1eU an gespritzten Normkleinstäben gemessen.

Untersucht wurden jeweils zwei Probenserien, die bei unterschiedlichen Verarbeitungstemperaturen hergestellt worden waren. Angegeben ist jeweils der Mittelwert aus der Prüfung von 10 Proben je Probenserie.

Die Viskositätszahlen (VZ[cm³/g]) wurden jeweils an einer 0,5 Gew.-%igen Lösung in Dimethylformamid bei 23°C bestimmt. Unlösliche Gelanteile wurden vor der Messung durch Zentrifugieren entfernt und die Einwaage entsprechend korrigiert.

ΔE ist ein Maß für die Einfärbbarkeit und wurde nach DIN6174 bestimmt. Der ΔE-Wert errechnet sich aus der Differenz der Opazität von 2mm dicken, bei 200°C gespritzten Rundscheiben über weißem und schwarzem Untergrund. Ist die so ermittelte Differenz ΔE klein, bedeutet dies, daß sich die Proben nur schlecht einfärben lassen.

Der Glanz wurde nach DIN67530 dadurch bestimmt, daß Licht bestimmter Intensität in einem Einstrahlwinkel von 45°C auf die Probe eingestrahlt und die Intensität des reflektierten Lichtes mittels eines Photogoniometers gemessen wurde.

Die Feststoffgehalte der Emulsionen bezeichnen den Gehalt aller Feststoffanteile in Gewichtsprozent bezogen auf die Gesamtmasse der jeweiligen Emulsion.

### I.1 Herstellung eines kleinteiligen erfindungsgemäßen Pfropfcopolymerisats (KP1)

### I.1.1 Herstellung der Pfropfgrundlage (KP1.1)

Das Monomerengemisch aus 3,2 g DCPA und 156,8 g Acrylsäure-n-butylester wurde in 1500 g Wasser unter Zusatz von 10 g des Kaliumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 65 °C erwärmt. 10 Minuten nach Anspringen der Polymerisationsreaktion wurde innerhalb von 3 Stunden eine Mischung aus weiteren 16,8 g DCPA und 823,2 g Acrylsäure-n-butylester zudosiert. Nach Beendigung der Monomerzugabe wurde die Emulsion noch 1 Stunde bei 65 °C gehalten.

Die mittlere Teilchengröße (d₅₀) betrug 80 nm.

### I.1.2 Herstellung der Pfropfauflage (KP1.2)

2100 g der in I.1 hergestellten Emulsion wurden mit 1150 g Wasser, 2,7 g Kaliumperoxodisulfat gemischt und unter Rühren auf 65 °C erwärmt. Nach Erreichen der Reaktionstemperatur wurden im Laufe von 1 Stunde 165 g Styrol zudosiert, wobei die mittlere Teilchengröße (d₅₀) 85 nm betrug. Nach Beendigung der Zugabe wurde eine Mischung aus 372 g Styrol und 124 g Acrylnitril zudosiert. Nach Beendigung der Zugabe wurde die Emulsion noch 2 Stunden bei 65 °C gehalten.

Die mittlere Teilchengröße (d₅₀) des Pfropfcopolymerisats KP1 betrug 97 nm.

### I.2 Herstellung des erfindungsgemäßen großteiligen Pfropfcopolymerisats (GP1)

### I.2.1 Herstellung der Pfropfgrundlage (GP1.1)

12,5 g der unter I.1.1 beschriebenen Pfropfgrundlage wurden mit 1500 g Wasser unter Zusatz von 3 g Kaliumperoxodisulfat, 3 g Natriumhydrogencarbonat und 1,5 g Natriumpyrophosphat unter Rühren auf 65 °C erwärmt. Innerhalb von 3 Stunden wurde eine Mischung aus 20 g DCPA und 980 g Acrylsäure-n-butylester sowie 3 g des Kaliumsalzes einer C₁₂- bis C₁₈-Paraffinsulfonsäure zudosiert. Nach Beendigung der Monomerzugabe wurde die Emulsion noch 1 Stunde bei 65 °C gehalten.

### I.2.2 Herstellung der Pfropfauflage (GP1.2)

2100 g der in I.2.1 hergestellten Emulsion wurden mit 1150 g Wasser, 2,7 g Kaliumperoxodisulfat gemischt und unter Rühren auf 65 °C erwärmt. Nach Erreichen der Reaktionstemperatur wurde im Lauf von 1 Stunde ein Monomerengemisch aus 165 g Styrol sowie 0,1 g des Kaliumsalzes einer C₁₂- bis C₁₈-Paraffinsulfonsäure zudosiert. Nach Beendigung der Zugabe wurde eine Mischung aus 372 g Styrol und 124 g Acrylnitril zudosiert. Nach Beendigung der Zugabe wurde die Emulsion noch 2 Stunden bei 65 °C gehalten.

Die mittlere Teilchengröße (d₅₀) der Pfropfcopolymerisate GP betrug 550 nm.

### I.3 Herstellung des Vergleichspfropfcopolymers (VP1)

### I.3.1 Herstellung der Pfropfgrundlage (VP1.1)

Die Herstellung der Pfropfgrundlage entspricht dem unter I.1 beschriebenen Verfahren.

### I.3.2 Herstellung der Pfropfauflage (VP1.2)

2100 g der in I.3.1 hergestellten Emulsion wurden mit 1150 g Wasser und 2,7 g Kaliumperoxodisulfat gemischt und unter Rühren auf 65 °C erwärmt. Nach Erreichen der Reaktionstemperatur wurde im Lauf von 3 Stunden ein Monomerengemisch aus 495 g Styrol und 165 g Acrylnitril zudosiert. Nach Beendingung der Zugabe wurde die Emulsion noch 2 Stunden bei 65 °C gehalten.

Das Pfropfcopolymerisat VP1 besitzt eine mittlere Teilchengröße von 95 nm.

### II. Aufarbeitung der Pfropfcopolymere

Die Pfropfcopolymerisate wurden mittels einer Calciumchloridlösung bei 95 °C aus der Emulsion gefällt, mit Wasser gewaschen und im Warmluftstrom getrocknet.

### III. Abmischungsversuche

III.1 Zur Herstellung der Abmischungen 1 und 2 der Tabelle 1 wurde als Komponente iii ein Styrol/Acrylnitril-Copolymerisat mit einem Acrylnitril-Gehalt von 34 Gew.-% und einer Viskositätszahl von 78 ml/g (die Visksitätszahlen wurden an einer 0,5%igen Lösung in DMF bei 23 °C bestimmt) verwendet. Die gefällten und getrockneten Pfropfcopolymerisate wurden als Komponente i mit 18 Gew.- % und als Komponente ii mit 12 Gew.-% mit 70 Gew.-% der Komponente iii bei 260 °C in einem Extruder abgemischt.
III.2 Zur Herstellung der Abmischungen 3, 4 und 5 der Tabelle 1 wurde als Komponente iii ein Styrol/Acrylnitril-Copolymerisat mit einem Acrylnitrilgehalt von 34% und einer Viskositätszahl von 78 ml/g (die Viskositätszahlen wurden an einer 0,5%igen DMF-Lösung bei 23 °C bestimmt) verwendet. Die gefällten und getrockneten Pfropfcopolymerisate wurden in einem Extruder mit der Komponente iii bei 260 °C abgemischt, so daß der Pfropfcopolymergehalt 50 Gew.-% betrug.

Aus diesen Gemischen wurden Formteile bei verschiedenen Temperaturen hergestellt, die einer anwendungstechnischen Prüfung unterzogen wurden, wie in Tabelle 1 dargestellt.

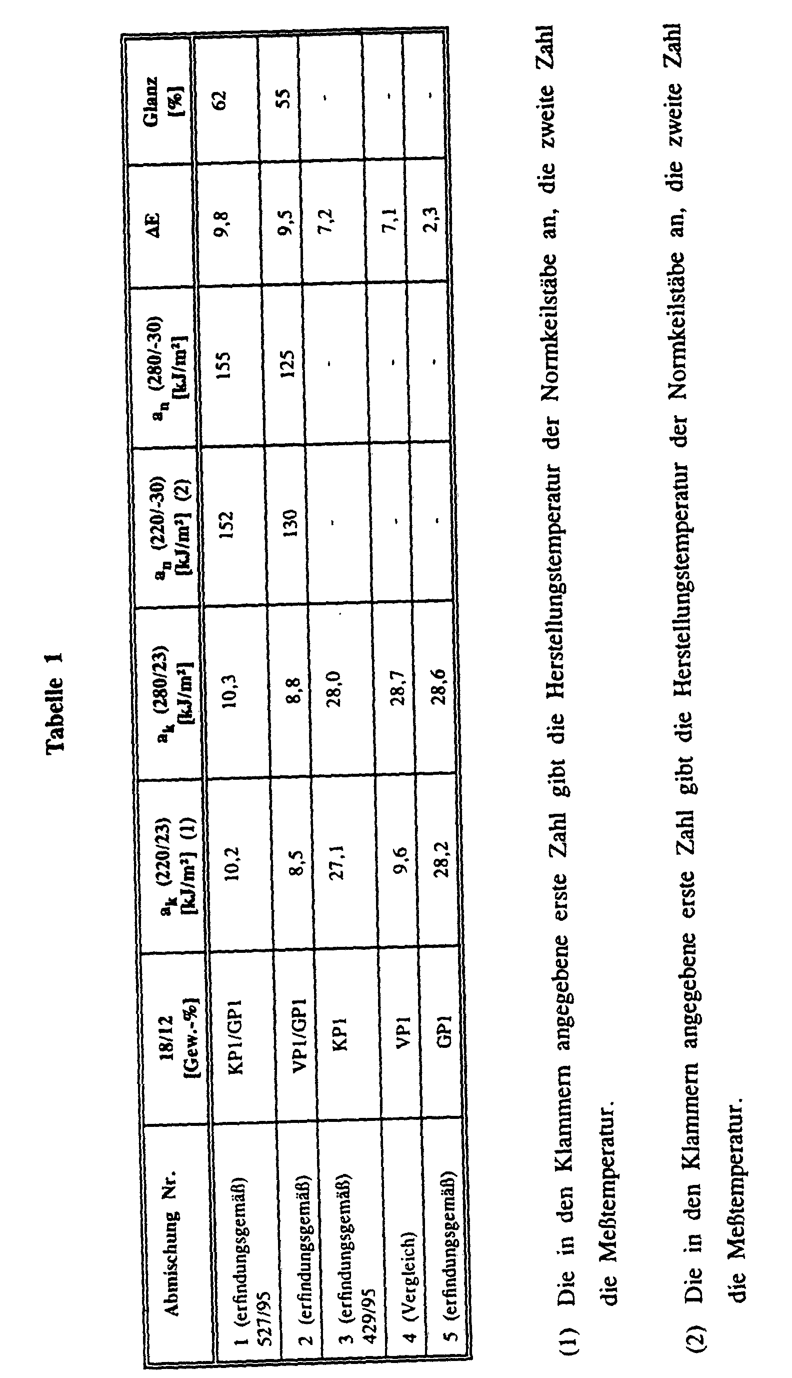

## Patentansprüche

1. Pfropfcopolymerisate (P1) mit einer mittleren Teilchengröße (d₅₀) von 40 bis 2000 nm, enthaltend mindestens
P1.1) ein Weichsegment aus kautschukelastischem Material mit einer Glastemperatur von höchstens 0°C und einer mittleren Teilchengröße (d₅₀) von 40 bis 120 nm als eine Pfropfgrundlage.
P1.2) ein Hartsegment mit einer Glastemperatur von mindestens 11°C als eine Pfropfauflage, das
P1.2.1) 30 bis 99,9 Gew.-% mindestens eines vinylaromatischen Monomeren (P1.2.1),
P1.2.2) 0 bis 20 Gew.-% mindestens eines Vernetzers (P1.2.2) und
P1. 2. 3) 0,1 bis 70 Gew.-% mindestens eines mit P1. 2. 1 copolymerisierbaren Monomeren (P1. 2. 3) beinhaltet,
wobei die Summe der Gew.-% von P1. 2. 1 bis P1. 2. 3 100 ergibt,
wobei der an die Pfropfgrundlage angrenzende Bereich der darauffolgenden Pfropfauflage P1. 2 20 bis 70 Gew.-% mindestens eines vinylaromatischen Monomeren P1. 2. 1 und der der Pfropfgrundlage abgewandte Bereich 30 bis 80 Gew.-% mindestens eines vinylaromatischen Monomeren P1. 2. 1 mit mindestens einem damit copolymerisierbaren Monomeren P1. 2. 3 in einem Verhältnis P1. 2. 1 zu P1. 2. 3 von 90:10 bis 60:40 aufweist, wobei die Summe der Gew.-% von P1. 2. 1 and P1. 2. 2 mit P1. 2. 3 100 ergibt.

2. Pfropfcopolymerisate P1 nach Anspruch 1, enthaltend
P1.1) 30 bis 95 Gew.-% eines Weichsegments mit einer Glastemperatur von höchstens 0°C als Pfropfgrundlage, das
P1.1.1) 50 bis 99,9 Gew.-% mindestens eines C₁- bis C₁₈-Acrylates, Diens oder Dialkylsiloxans (P1.1.1),
P1.1.2) 0.1 bis 50 Gew.-% mindestens eines Vernetzers (P1.1.2),
P1.1.3) 0 bis 49,9 Gew.-% mindestens eines mit P1.1.1 copolymeriserbaren Monomeren (P1.1.3) beinhaltet,
wobei die Summe der Gew.-% von P1.1.1 bis P1.1.3 100 ergibt, und
P1.2) 5 bis 70 Gew.-% eines Hartsegments mit einer Glastemperatur von mindestens 25°C als Pfropfauflage.

3. Pfropfcopolymerisate (P2) mit einer mittleren Teilchengröße von 40 bis 2000 nm, enthaltend Pfropfcopolymerisat P1 nach Anspruch 1 oder 2 und eine weitere Pfropfauflage P2.3 mit einer Glastemperatur von mindestens 10°C, die mindestens ein vinylaromatisches Monomer als Monomer oder als eines von zwei oder mehr miteinander copolymerisierbaren Monomeren beinhaltet.

4. Pfropfcopolymerisat P2 nach Anspcuch 3, enthaltend
P2.1) 30 bis 90 Gew.-% einer Pfropfgrundlage P1.1,
P2.2) 5 bis 50 Gew.-% einer ersten Pfropfauflage P1.2 und
P2.3) 5 bis 50 Gew.-% einer weiteren Pfropfauflage mit einer Glastemperatur von mindestens 25°C (P2.3), die
P2.3.1) 1 bis 99 Gew.-% mindestens eines vinylaromatischen Monomeren (P2.3.1) und
P2.3.2) 1 bis 99 Gew.-% mindestens eines mit P2.3.1 copolymerisierbaren Monomeren (P2.3.2) beinhaltet,
wobei die Summe der Gew.-% von P2.1 bis P2.3 sowie P2.3.1 und P2.3.2 jeweils 100 ergibt.

5. Kleinteilige Pfropfcopolymere P1 oder P2 nach einem der Ansprüche 1 und 2 oder 3 und 4 mit einer mittleren Teilchengröße von 40 bis 200 nm.

6. Großteilige Pfropfcopolymere P1 oder P2 nach einem der Ansprüche 1 und 2 oder 3 und 4 mit einer mittleren Teilchengröße von 250 bis 2000 nm.

7. Verfahren zur Herstellung eines Pfropfcopolymerisates P1 nach einem der Ansprüche 1, 2, 5 und 6, **dadurch gekennzeichnet, daß** die das Weichsegment P1.1 und das Hartsegment P1.2 bildenden Monomere und Vernetzer in Gegenwart von Emulgatoren in einem Temperaturbereich von 20 bis 100°C polymerisiert werden,
- wobei mit der Polymerisation der Pfropfgrundlage P1.1 vor der der Pfropfauflage P1.2 begonnen wird,
- wobei bei der Polymerisation der Pfropfauflage P1.2 mit der Zugabe von mindestens einem vinylaromatischen Monomeren vor der Zugabe von mindestens einem vinylaromatischen Monomeren mit mindestens einem damit copolymerisierbaren Monomeren begonnen wird.

8. Verfahren zur Herstellung eines Pfropfcopolymerisates P2 nach einem der Ansprüche 3 bis 6, **dadurch gekennzeichnet, daß** die das Weichsegment P2.1 und die Hartsegmente P2.2 und P2.3 bildenden Monomere und Vernetzer in Gegenwart von Emulgatoren in einem Temperaturbereich von 20 bis 100°C polymerisiert werden,
- wobei mit der Polymerisation der Pfropfgrundlage P2.1 vor der der Pfropfauflage P2.2 begonnen wird,
- wobei bei der Polymerisation der Pfropfauflage P2.2 mit der Zugabe von mindestens einem vinylaromatischen Monomeren vor der Zugabe von mindestens einem vinylaromatischen Monomeren mit mindestens einem damit copolymerisierbaren Monomeren begonnen wird und
- wobei die Polymerisation der Pfropfauflage P2.3 nach dem Anfang der Polymerisation der Pfropfauflage P2.2 beginnt.

9. Verfahren nach Anspruch 7 oder 8, **dadurch gekennzeichnet, daß** die Pfropfauflage P1.2 bzw. P2.2 in mindestens zwei Stufen hergestellt wird, wobei in der ersten Stufe 20 bis 70 Gew.-% von P1.2.1 bzw. P2.2.1 und in der zweiten Stufe 30 bis 80 Gew.-% eines Gemisches der Monomeren P1.2.1 bzw. P2.2.1 und P1.2.2 bzw. P2.2.2 im Gewichtsverhältnis 90 : 10 bis 60 : 40 verwandt werden.

10. Verwendung mindestens eines der Pfropfcopolymerisate P1 oder P2 in Mischungen.

11. Mischung aus Pfropfcopolymerisaten (Mk), enthaltend mindestens ein kleinteiliges Pfropfcopolymerisat P1 und/oder P2.

12. Mischung aus Pfropfcopolymerisaten (Mg), enthaltend mindestens ein großteiliges Pfropfcopolymerisat P1 und/oder P2.

13. Verfahren zur Herstellung von Mischungen nach Anspruch 11 oder 12, **dadurch gekennzeichnet, daß** die in den Mischungen beinhalteten Pfropfcopolymerisate in einem Extruder bei Temperaturen von 200 bis 300°C und einer mittleren Verweilzeit von 0,1 bis 100 min miteinander vermischt werden.

14. Verwendung mindestens eines der Pfropfcopolymerisate P1 und P2 und/oder mindestens einer der Mischungen Mk und Mg für thermoplastische Massen.

15. Thermoplastische Massen (T1), enthaltend
T1.i) 0,1 bis 95 Gew.-% mindestens eines der Pfropfcopolymerisate P1 und P2 und/oder mindestens eine der Mischungen Mk und Mg,
T1.ii) 0 bis 94,9 Gew.-% mindestens eines von T1.i verschiedenen Pfropfcopolymerisats und/oder Mischung,
T1.iii) 5 bis 99 Gew.-% mindestens eines Copolymerisats aus
T1.iii.1) 50 bis 100 Gew.-% mindestens eines vinylaromatischen Monomeren, C₁- bis C₁₈-Alkylacrylats, C₁- bis C₁₈-Alkylmethacrylats oder deren Mischungen und
T1.iii.2) 0 bis 50 Gew.-% Acrylnitril, Methacrylnitril, Maleinsäureanhydrid, n-substituierte Maleimide oder deren Mischungen,
wobei die Summe der Gewichtsprozente von T1.iii.1 und T1.iii.2 100 ergibt,
T1.iv) 0 bis 90 Gew.-% mindestens eines Polycarbonats und
T1.v) 0 bis 50 Gew.-% Zusatzstoffe,
wobei die Summe der Gewichtsprozente von T1.i bis T1.v 100 ergibt.

16. Formkörper, Folien, Fasern oder Beschichtungen, enthaltend mindestens eines der Pfropfcopolymerisate P1 und P2 und/oder mindestens eine der Mischungen Mk und Mg und/oder thermoplastische Massen T1.

17. Verwendung mindestens eines der Pfropfcopolymerisate P1 und P2 und/oder mindestens einer der Mischungen Mk und Mg und/oder thermoplastischen Massen T1 für Formkörper, Folien, Fasern oder Beschichtungen.

## Claims

1. A graft copolymer (P1) having an average particle size (d₅₀) of from 40 to 2 000 nm, containing at least
P1.1) a soft segment comprising elastomeric material having a glass transition temperature of not more than 0°C and an average particle size (d₅₀) of from 40 to 120 nm as a grafting base and
P1.2) a hard segment having a glass transition temperature of at least 11°C as a graft layer, which contains
P1.2.1) from 30 to 99.9% by weight of at least one vinylaromatic monomer (P1.2.1),
P1.2.2) from 0 to 20% by weight of at least one crosslinking agent (P1.2.2) and
P1.2.3) from 0.1 to 70% by weight of at least one monomer (P1.2.3) copolymerizable with P1.2.1,
the sum of the percentages by weight of P1.2.1 to P1.2.3 being 100, that region of the subsequent graft layer P1.2 which is adjacent to the grafting base comprising from 20 to 70% by weight of at least one vinylaromatic monomer P1.2.1 and that region facing away from the grafting base comprising from 30 to 80% by weight of at least one vinylaromatic monomer P1.2.1 with at least one monomer P1.2.3 copolymerizable therewith, in a ratio of P1.2.1 to P1.2.3 of from 90:10 to 60:40, the sum of the percentages by weight of P1.2.1 and P1.2.2 with P1.2.3 being 100.

2. A graft copolymer P1 as claimed in claim 1, containing
P1.1) from 30 to 95% by weight of a soft segment having a glass transition temperature of not more than 0°C as a grafting base, which contains
P1.1..1) from 50 to 99.9% by weight of at least one C₁- to C₁₈-acrylate, diene or dialkylsiloxane (P1.1.1),
P1.1.2) from 0.1 to 50% by weight of at least one crosslinking agent (P1.1.2),
P1.1.3) from 0 to 49,9% by weight of at least one monomer (P1.1.3) copolymerizable with P1.1.1, the sum of the percentages by weight of P1.1.1 to P1.1.3 being 100, and
P1.2) from 5 to 70% by weight of a hard segment having a glass transition temperature of at least 25°C as a graft layer.

3. A graft copolymer (P2) having an average particle size of from 40 to 2 000 nm, containing graft copolymer P1 as claimed in claim 1 or 2 and a further graft layer P2.3 which has a glass transition temperature of at least 10°C and contains at least one vinylaromatic monomer as the monomer or as one of two or more monomers copolymerizable with one another.

4. A graft copolymer P2 as claimed in claim 3, containing
P2.1) from 30 to 90% by weight of a grafting base P1.1,
P2.2) from 5 to 50% by weight of a first graft layer P1.2 and
P2.3) from 5 to 50% by weight of a further graft layer which has a glass transition temperature of at least 25°C (P2.3) and contains
P2.3.1) from 1 to 99% by weight of at least one vinylaromatic monomer (P2.3.1) and
P2.3.2) from 1 to 99% by weight of at least one monomer (P2.3.2) copolymerizable with P2.3.1,
the sum of the percentages by weight of P2.1 to P2.3, and P2.3.1 and P2.3.2, being in each case 100.

5. A small-particled graft copolymer P1 or P2 as claimed in either of claims 1 and 2 or 3 and 4, having an average particle size of from 40 to 200 nm.

6. A large-particled graft copolymer P1 or P2 as claimed in either of claims 1 and 2 or 3 and 4, having an average particle size of from 250 to 2 000 nm.

7. A process for the preparation of a graft copolymer P1 as claimed in any of claims 1, 2, 5 and 6, wherein the monomers forming the soft segment P1.1 and the hard segment P1.2 and crosslinking agent are polymerized in the presence of emulsifiers in a temperature range of from 20 to 100°C,
- the polymerization of the grafting base P1.1 being started before that of the graft layer P1.2,
- in the polymerization of the graft layer P1.2, the addition of at least one vinylaromatic monomer being started before the addition of at least one vinylaromatic monomer with at least one monomer copolymerizable therewith.

8. A process for the preparation of a graft copolymer P2 as claimed in *any* of claims 3 to 6, wherein the monomers forming the soft segment P2.1 and the hard segments P2.2 and P2.3 and crosslinking agent are polymerized in the presence of emulsifiers in a temperature range of from 20 to 100°C,
- the polymerization of the grafting base P2.1 being started before that of the graft layer P2.2,
- in the polymerization of the graft layer P2.2, the addition of at least one vinylaromatic monomer being started before the addition of at least one vinylaromatic monomer with at least one monomer copolymerizable therewith and
- the polymerization of the graft layer P2.3 starting after the start of the polymerization of the graft layer P2.2.

9. The process as claimed in claim 7 or 8, wherein the graft layer P1.2 or P2.2 is prepared in at least two stages, from 20 to 70% by weight of P1.2.1 or P2.2.1 being used in the first stage and from 30 to 80% by weight of a mixture of the monomers P1.2.1 or P2.2.1 and P1.2.2 or P2.2.2 in the weight ratio of from 90:10 to 60:40 being used in the second stage.

10. The use of at least one of the graft copolymers P1 or P2 in blends.

11. A blend comprising graft copolymers (Mk), containing at least one small-particled graft copolymer P1 and/or P2.

12. A blend comprising graft copolymers (Mg), containing at least one large-particled graft copolymer P1 and/or P2.

13. A process for the preparation of blends as claimed in claim 11 or 12, wherein the graft copolymers contained in the blends are mixed with one another in an extruder at from 200 to 300°C and in an average residence time of from 0.1 to 100 minutes.

14. The use of at least one of the graft copolymers P1 and P2 and/or at least one of the blends Mk and Mg for thermoplastic materials.

15. A thermoplastic material (T1), containing
T1.i) from 0.1 to 95% by weight of at least one of the graft copolymers P1 and P2 and/or at least one of the blends Mk and Mg,
T1.ii) from 0 to 94.9% by weight of at least one graft copolymer and/or blend differing from T1.i,
T1.iii) from 5 to 99% by weight of at least one copolymer of
T1.iii.1) from 50 to 100% by weight of at least one vinylaromatic monomer, C₁- to C₁₈-alkyl acrylate, C₁- to C₁₈-alkyl methacrylate or a mixture thereof and
T1.iii.2) from 0 to 50% by weight of acrylonitrile, methacrylonitrile, maleic anhydride, N-substituted maleimide or a mixture thereof,
the sum of the percentages by weight of T1.iii.1 and T1.iii.2 being 100,
T1.iv) from 0 to 90% by weight of at least one polycarbonate and
T1.v) from 0 to 50% by weight of additives,
the sum of the percentages by weight of T1.i to T1.v being 100.

16. A molding, film, fiber or coating containing at least one of the graft copolymers P1 and P2 and/or at least one of the blends Mk and Mg and/or thermoplastic materials T1.

17. The use of at least one of the graft copolymers P1 and P2 and/or at least one of the blends Mk and Mg and/or thermoplastic materials T1 for moldings, films, fibers or coatings.

## Revendications

1. Copolymères greffés (P1) présentant une taille moyenne des particules (d₅₀) de 40 à 2000 nm, contenant au moins
P1.1) un segment mou à base d'une matière élastique de type caoutchouc ayant une température de transition vitreuse d'au maximum 0°C et une taille moyenne des particules (d₅₀) de 40 à 120 nm, comme base de greffage,
P1.2) un segment dur présentant une température de transition vitreuse d'au moins 11°C, sous la forme d'une couche greffée, qui comporte
P1.2.1) 30 à 99,9% en poids d'au moins un monomère vinyl-aromatique (P1.2.1),
P1.2.2) 0 à 20% en poids d'au moins un agent de réticulation (P1.2.2), et
P1.2.3) 0,1 à 70% en poids d'au moins un monomère (P1.2.3) copolymérisable avec P1.2.1,
la somme des % en poids de P1.2.1 à P1.2.3 étant de 100, où la zone adjacente à la base de greffage de la couche greffée subséquente P1.2 présente 20 à 70% en poids d'au moins un monomère vinyl-aromatique P1.2.1 et la zone située à l'opposé de la base de greffage 30 à 80% en poids d'au moins un monomère vinyl-aromatique P1.2.1 avec au moins un monomère copolymérisable avec lui P1.2.3 dans un rapport entre P1.2.1 et P1.2.3 de 90/10 à 60/40, la somme des % en poids de P1.2.1 et de P1.2.2 avec P1.2.3 étant de 100.

2. Copolymères greffés P1 suivant la revendication 1, contenant
P1.1) 30 à 95% en poids d'un segment mou présentant une température de transition vitreuse d'au maximum 0°C, comme base de greffage, qui comporte
P1.1.1) 50 à 99,9% en poids d'au moins un acrylate en C₁-C₁₈, diène ou dialkylsiloxane (P1.1.1),
P1.1.2) 0,1 à 50% en poids d'au moins un agent de réticulation (P1.1.2),
P1.1.3) 0 à 49,9% en poids d'au moins un monomère (P1.1.3) copolymérisable avec P1.1.1,
la somme des % en poids de P1.1.1 à P1.1.3 étant de 100, et
P1.2) 5 à 70% en poids d'un segment dur ayant une température de transition vitreuse d'au moins 25°C comme couche greffée.

3. Copolymères greffés (P2) présentant une taille moyenne des particules de 40 à 2000 nm, contenant un copolymère greffé P1 suivant l'une des revendications 1 et 2 et une autre couche greffée P2.3 ayant une température de transition vitreuse d'au moins 10°C qui comporte au moins un monomère vinyl-aromatique comme monomère ou comme l'un de deux ou plusieurs monomères copolymérisables entre eux.

4. Copolymères greffés P2 suivant la revendication 3, contenant
P2.1) 30 à 90% en poids d'une base de greffage P1.1,
P2.2) 5 à 50% en poids d'une première couche greffée P1.2, et
P2.3) 5 à 50% en poids d'une autre couche greffée ayant une température de transition vitreuse d'au moins 25°C (P2.3), qui comporte
P2.3.1) 1 à 99% en poids d'au moins un monomère vinyl-aromatique (P2.3.1), et
P2.3.2) 1 à 99% en poids d'au moins un monomère (P2.3.2) copolymérisable avec P2.3.1,
la somme des % en poids de P2.1 à P2.3 ainsi que de P2.3.1 et de P2.3.2 étant chaque fois de 100.

5. Copolymères greffés à petites particules P1 ou P2 suivant l'une des revendications 1 et 2 ou 3 et 4, présentant une taille moyenne des particules de 40 à 200 nm.

6. Copolymères greffés à grandes particules P1 ou P2 suivant l'une des revendications 1 et 2 ou 3 et 4, présentant une taille moyenne des particules de 250 à 2000 nm.

7. Procédé de préparation d'un copolymère greffé P1 suivant l'une des revendications 1, 2, 5 et 6, **caractérisé en ce qu'**on polymérise les monomères et agents de réticulation formant le segment mou P1.1 et le segment dur P1.2 en présence d'agents émulsionnants dans une gamme thermique de 20 à 100°C,
- la polymérisation de la base de greffage P1.1 étant commencée avant celle de la couche greffée P1.2,
- la polymérisation de la couche greffée P1.2 étant commencée avec l'addition d'au moins un monomère vinyl-aromatique avant l'addition d'au moins un monomère vinyl-aromatique avec au moins un monomère copolymérisable avec lui.

8. Procédé de préparation d'un copolymère greffé P2 suivant l'une des revendications 3 à 6, **caractérisé en ce qu'**on polymérise les monomères et agents de réticulation formant le segment mou P2.1 et les segments durs P2.2 et P2.3 en présence d'agents émulsionnants dans une gamme thermique de 20 à 100°C,
- la polymérisation de la base de greffage P2.1 étant commencée avant celle de la couche greffée P2.2,
- la polymérisation de la couche greffée P2.2 étant commencée avec l'addition d'au moins un monomère vinyl-aromatique avant l'addition d'au moins un monomère vinyl-aromatique avec au moins un monomère copolymérisable avec lui, et
- la polymérisation de la couche greffée P2.3 commençant après le début de la polymérisation de la couche greffée P2.2.

9. Procédé suivant l'une des revendications 7 et 8, **caractérisé en ce que** la couche greffée P1.2 ou P2.2 est préparée en au moins deux étapes, 20 à 70% en poids de P1.2.1 ou de P2.2.1 étant utilisés dans la première étape et 30 à 80% en poids d'un mélange des monomères P1.2.1 ou P2.2.1 et P1.2.2 ou P2.2.2 dans un rapport pondéral de 90/10 à 60/40 dans la deuxième étape.

10. Utilisation d'au moins un des copolymères greffés P1 ou P2 dans des mélanges.

11. Mélange de copolymères greffés (Mk) contenant au moins un copolymère greffé P1 et/ou P2 à petites particules.

12. Mélange de copolymères greffés (Mg) contenant au moins un copolymère greffé P1 et/ou P2 à grandes particules.

13. Procédé de préparation de mélanges suivant l'une des revendications 11 et 12, **caractérisé en ce que** les copolymères greffés contenus dans les mélanges sont mélangés l'un à l'autre dans une extrudeuse à des températures de 200 à 300°C et pour un temps de séjour moyen de 0,1 à 100 minutes.

14. Utilisation d'au moins un des copolymères greffés P1 et P2 et/ou d'au moins un des mélanges Mk et Mg pour des masses thermoplastiques.

15. Masses thermoplastiques (T1), contenant
T1.i) 0,1 à 95% en poids d'au moins un des copolymères greffés P1 et P2 et/ou au moins un des mélanges Mk et Mg,
T1.ii) 0 à 94,9% en poids d'au moins un copolymère greffé et/ou mélange différent de T1.i,
T1.iii) 5 à 99% en poids d'au moins un copolymère à base
T1.iii.1) de 50 à 100% en poids d'au moins un monomère vinyl-aromatique, un acrylate d'alkyle en C₁-C₁₈, un méthacrylate d'alkyle en C₁-C₁₈ ou de leurs mélanges, et
T1.iii.2) de 0 à 50% en poids d'acrylonitrile, de méthacrylonitrile, d'anhydride maléique, d'imides maléiques n-substitués ou de leurs mélanges,
la somme des % en poids de T1.iii.1 et de T1.iii.2 étant de 100,
T1.iv) 0 à 90% en poids d'au moins un polycarbonate, et
T1.v) 0 à 50% en poids d'additifs,
la somme des % en poids de T1.i à T1.v étant de 100.

16. Corps façonnés, feuilles, fibres ou revêtements, contenant au moins un des copolymères greffés P1 et P2 et/ou au moins un des mélanges Mk et Mg et/ou des masses thermoplastiques T1.

17. Utilisation d'au moins un des copolymères greffés P1 et P2 et/ou d'au moins un des mélanges Mk et Mg et/ou des masses thermoplastiques T1 pour des corps façonnés, des feuilles, des fibres ou des revêtements.
